# FASCICULE DE BREVET EUROPEEN

(11) **EP 4 106 122 B1**
(45) Date de publication et mention de la délivrance du brevet: **04.06.2025**
(21) Numéro de dépôt: 22178628.8
(22) Date de dépôt: 13.06.2022
(51) Int. Cl.: H02G 5/08

(54) **COFFRET DE DÉRIVATION POUR JEU DE BARRES**
ABZWEIGKASTEN FÜR SAMMELSCHIENEN
TAP-OFF BOX FOR BUSBARS

(30) Priorité: 14.06.2021 FR 2106265
(43) Date de publication de la demande: 21.12.2022
(73) Titulaire: Schneider Electric Industries SAS, 92500 Rueil-Malmaison (FR)
(72) Inventeur: LINARES, Louis, 38660 LA TERRASSE (FR); BOUCHARD, Jean-Luc, 38100 GRENOBLE (FR); BAROCCI, Christian, 38160 SAINT MARCELLIN (FR)
(74) Mandataire: Lavoix

(56) Documents cités:
- CN-A- 110 752 567
- CN-A- 112 420 419
- US-A- 3 301 989

## Description

La présente invention concerne un coffret de dérivation pour jeu de barres.

Dans le domaine de la distribution électrique industrielle, il est connu d'utiliser dans une installation électrique des jeux de barres pour distribuer de l'énergie électrique depuis une source d'électricité jusqu'à des circuits électriques. Il est connu d'installer de tels jeux de barres dans des goulottes, plus couramment appelées « canalisations ».

Il est également connu de fixer un coffret de dérivation sur un jeu de barres, pour permettre le raccordement d'un circuit électrique au jeu de barres. Un tel coffret de dérivation comprend généralement des connecteurs, reliés électriquement au jeu de barres, un dispositif de distribution électrique, permettant d'alimenter un circuit électrique, et un dispositif de coupure, permettant soit de connecter entre eux, soit d'isoler, les connecteurs et le dispositif de distribution. Le dispositif de distribution électrique ainsi que le dispositif de coupure sont disposés sur des côtés du coffret, de sorte à être accessibles depuis l'extérieur du coffret.

Généralement, un tel coffret de dérivation est adapté à une installation électrique lors de sa fabrication, pour tenir compte des contraintes propres à l'installation électrique. Ainsi, les dimensions du coffret sont choisies avant sa fabrication, tout comme le positionnement du dispositif de distribution électrique et du dispositif de coupure. Chaque coffret de dérivation est donc fabriqué sur mesure, ce qui est coûteux. Par ailleurs, de tels coffrets de dérivation ne sont pas polyvalents, car ils ne peuvent pas être modifiés, ou personnalisés, au moment de leur mise en œuvre au sein de l'installation électrique. Or, il peut arriver, au moment de la mise en œuvre d'un coffret de dérivation, de constater que sa configuration n'est pas adaptée à l'installation électrique. Il est alors souvent nécessaire de devoir changer certaines pièces du coffret pour le modifier, voire de devoir changer l'intégralité du coffret, ce qui est onéreux et conduit à des pertes de temps importantes.

Par exemple, le document CN-A-110752567 décrit un coffret de dérivation comprenant une paroi arrière, deux parois latérales, deux joues et une porte fixée à l'une des parois latérales par une charnière. Un disjoncteur est actionnable au travers d'une fenêtre ménagée dans la porte. Ce coffret de dérivation n'est pas polyvalent, car la position de la porte et du disjoncteur ne peuvent pas être modifiées.

Les documents CN-A-112420419 et US-A-3301989 décrivent également de tels coffrets, comprenant une porte et une paroi arrière sur laquelle un disjoncteur est fixé, le disjoncteur étant accessible au travers de la porte. Dans ces coffrets, les positions de la porte et du disjoncteur ne peuvent pas être modifiées.

C'est à cet effet qu'entend plus particulièrement remédier l'invention, en proposant un coffret de dérivation plus polyvalent.

À cet effet, l'invention concerne un coffret de dérivation pour jeu de barres comprenant :
- un boîtier de forme globalement parallélépipédique rectangle, comprenant :
   ∘ au moins deux traverses, parallèles entre elles ;
   ∘ un fond ;
   ∘ deux joues, parallèles entre elles et perpendiculaires au fond, fermant deux côtés opposés du boîtier, les traverses s'étendant entre les deux joues ; et
   ∘ au moins trois ouvertures distinctes, chaque ouverture s'étendant perpendiculairement aux joues entre deux traverses ou entre une traverse et le fond,
- un mécanisme de verrouillage, configuré pour permettre le verrouillage du boîtier sur un jeu de barres, et
- un système de distribution électrique, comprenant :
   ∘ des connecteurs électriques d'entrée, configurés pour être électriquement connectés au jeu de barres lorsque le boîtier est verrouillé sur le jeu de barres ;
   ∘ un dispositif de distribution électrique de sortie, configuré pour alimenter un circuit électrique aval ; et
   ∘ au moins un dispositif de coupure, disposé à proximité d'une ouverture du boîtier et configuré pour être commutable entre :
      ▪ une configuration fermée, dans laquelle le dispositif de coupure connecte les connecteurs électriques d'entrée au dispositif de distribution électrique ; et
      ▪ une configuration ouverte, dans laquelle le dispositif de coupure isole les connecteurs électriques d'entrée du dispositif de distribution électrique.

Selon l'invention, en configuration assemblée du coffret de dérivation, chaque ouverture du boîtier est fermée par un plastron s'étendant perpendiculairement aux joues entre deux traverses, chaque plastron étant choisi parmi un ensemble de plastrons distincts comprenant :
- un plastron plein ;
- un plastron de connexion ;
- un plastron ajouré comprenant une fenêtre ; et
- un plastron avec porte comprenant une fenêtre,
chaque plastron de l'ensemble de plastrons étant configuré pour pouvoir fermer toutes les ouvertures du boîtier. En outre, parmi les plastrons, au moins un plastron est un plastron ajouré ou un plastron avec porte, et parmi les plastrons, au moins un plastron est un plastron de connexion portant le dispositif de distribution électrique de sortie ou une partie du dispositif de distribution électrique de sortie. De plus, le dispositif de coupure est disposé sur un côté du boîtier comprenant un plastron ajouré ou un plastron avec porte.

Grâce à l'invention, chaque ouverture du coffret de dérivation peut accueillir plusieurs plastrons distincts d'un ensemble de plastron, ce qui rend la configuration du coffret simple à modifier.

Selon des aspects avantageux, mais non obligatoires de l'invention, le coffret de dérivation incorpore une ou plusieurs des caractéristiques suivantes, prises isolément ou selon toutes combinaisons techniquement admissibles :
- Une longueur des joues est sensiblement égale à une largeur des joues, ou une longueur des joues est environ deux fois supérieure à une largeur des joues, la largeur des joues étant sensiblement égale à une largeur des ouvertures.
- Le coffret comprend au moins deux ensembles fonctionnels disposés sur deux côtés opposés du boîtier, chaque ensemble fonctionnel comprenant un dispositif de coupure et une barre de sécurité, la barre de sécurité étant mobile entre une position de déverrouillage, dans laquelle le dispositif de coupure de l'ensemble fonctionnel est en configuration ouverte, et une position de verrouillage.
- Le mécanisme de verrouillage comprend une poignée, mobile entre une position de verrouillage dans laquelle le coffret de dérivation est configuré pour être verrouillé sur le jeu de barres, et une position de déverrouillage dans laquelle le coffret de dérivation est configuré pour ne pas être verrouillé sur le jeu de barres, et lorsque la barre de sécurité d'au moins un ensemble fonctionnel est en position de verrouillage, cette barre de sécurité empêche le déplacement de la poignée de sa position de verrouillage vers sa position de déverrouillage.
- Les joues sont globalement rectangulaires et présentent quatre coins, deux bords longs et deux bords courts, la longueur des bords longs des joues étant environ égale à deux fois la largeur des bords courts des joues. Le boîtier comprend quatre traverses, parmi lesquelles trois traverses s'étendent entre les joues entre trois des quatre coins des joues et une traverse s'étend entre les joues depuis le centre de l'un des deux bords longs des joues, le fond s'étendant entre les joues depuis le quatrième coin des joues le long de l'autre bord long des joues, ou parmi lesquelles deux traverses s'étendent entre les joues entre deux des coins des joues et deux traverses s'étendent entre les joues depuis le centre des deux bords longs des joues, le fond s'étendant entre les joues depuis les deux autres coins des joues. De plus, le boîtier comprend cinq ouvertures distinctes, les cinq ouvertures étant réparties sur les quatre côtés du boîtier n'étant pas fermés par les joues. En outre, chaque ouverture est fermée par un plastron.
- Chaque plastron est soit parallèle, soit perpendiculaire au fond du boîtier.
- La fenêtre du plastron ajouré ou du plastron avec porte est configurée pour qu'un levier de commutation du dispositif de coupure s'étende au travers de la fenêtre et puisse être commuté depuis l'extérieur du boîtier, le levier de commutation étant commutable entre une position ouverte dans laquelle le dispositif de coupure est en configuration ouverte et une position fermée dans laquelle le dispositif de coupure est en configuration fermée.
- Le plastron de connexion comprend au moins une prise électrique.
- Les plastrons de l'ensemble de plastrons sont configurés pour fermer les ouvertures du boîtier dans au moins deux configurations distinctes du coffret de dérivation, entre lesquelles le plastron de connexion et/ou le plastron ajouré ou le plastron avec porte sont orientés différemment par rapport au fond.
- Les plastrons de l'ensemble de plastrons sont configurés pour fermer les ouvertures du boîtier dans au moins deux configurations distinctes du coffret de dérivation, dans lequel, dans une première configuration du coffret de dérivation, le fond ferme entièrement un côté supérieur du boîtier, et dans lequel, dans une deuxième configuration du coffret de dérivation, le fond ferme entièrement ou partiellement un côté arrière du coffret de dérivation.

L'invention sera mieux comprise et d'autres avantages de celle-ci apparaitront plus clairement à la lumière de la description qui va suivre de cinq modes de réalisation d'un coffret de dérivation, conformes à son principe, donnée uniquement à titre d'exemple et faite en référence aux dessins annexés dans lesquels :
[Fig. 1] La figure 1 est une vue en perspective d'une installation électrique comprenant un coffret de dérivation conforme à un premier mode de réalisation de l'invention et un jeu de barres;
[Fig. 2] La figure 2 est une vue en perspective du coffret de dérivation de la figure 1, dans une première configuration ;
[Fig. 3] La figure 3 est une vue en perspective, selon un autre angle de vue, du coffret de dérivation des figures 1 et 2, dans une deuxième configuration ;
[Fig. 4] La figure 4 est une vue de côté d'une partie du coffret de dérivation des figures 1 à 3, dans la première configuration ;
[Fig. 5] La figure 5 est une vue côté de la même partie du coffret de dérivation des figures 1 à 4, dans une troisième configuration ;
[Fig. 6] La figure 6 est une vue de côté de la même partie du coffret de dérivation des figures 1 à 5, dans la deuxième configuration ;
[Fig. 7] La figure 7 est une vue en perspective d'une autre partie du coffret de dérivation des figures 1 à 6, dans la première configuration ;
[Fig. 8] La figure 8 est une vue en perspective de la même autre partie du coffret de dérivation des figures 1 à 7, dans la deuxième configuration ;
[Fig. 9] La figure 9 regroupe trois inserts montrant, en vue de côté, trois étapes du démontage d'une partie du coffret de dérivation des figures 1 à 8 ;
[Fig 10] La figure 10 regroupe quatre inserts montrant quatre plastrons pouvant appartenir au coffret de dérivation des figures 1 à 9 ;
[Fig. 11] La figure 11 est une vue en perspective éclatée du coffret de dérivation des figures 1 à 9 dans une première hypothèse d'installation;
[Fig. 12] La figure 12 est une vue en perspective éclatée du coffret de dérivation de des figures 1 à 9 dans une deuxième hypothèse d'installation ;
[Fig. 13] La figure 13 est une vue de côté d'une partie d'un coffret de dérivation conforme à un deuxième mode de réalisation de l'invention ;
[Fig. 14] La figure 14 est une vue en perspective éclatée du coffret de dérivation du deuxième mode de réalisation dans une hypothèse d'installation ;
[Fig. 15] La figure 15 est une vue de côté d'une partie d'un coffret de dérivation conforme à un troisième mode de réalisation de l'invention ;
[Fig. 16] La figure 16 est une vue en perspective d'une partie d'un coffret de dérivation conforme à un quatrième mode de réalisation de l'invention ;
[Fig. 17] La figure 17 est une vue en perspective d'une partie d'un coffret de dérivation conforme à un cinquième mode de réalisation de l'invention ; et
[Fig. 18] La figure 18 regroupe quatre inserts illustrant quatre configurations de coffrets de dérivation conformes à l'invention.

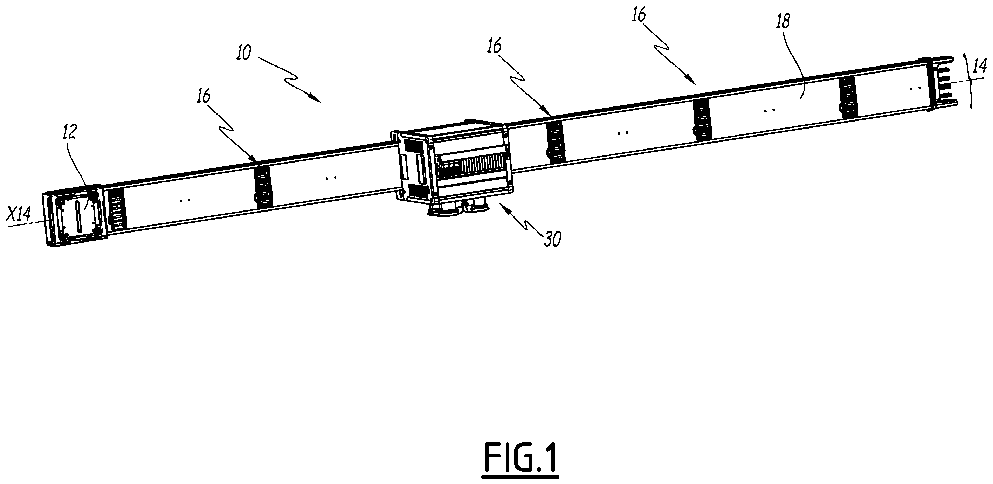

Une installation électrique 10 est représentée à la figure 1. Cette installation électrique comprend une source d'électricité 12 ainsi qu'un jeu de barres 14, connecté à la source d'électricité 12. Le jeu de barres comprend en pratique plusieurs barres conductrices, par exemple en cuivre ou en aluminium. Dans l'exemple, le jeu de barres comprend cinq barres conductrices, dont une est reliée à un neutre de la source d'électricité, trois sont reliées à des phases de la source d'électricité et une est reliée à la terre. Ainsi, dans l'exemple, la source d'électricité 12 est une source délivrant un courant triphasé et un neutre. La barre conductrice reliée à la terre n'est pas visible à la figure 1.

Le jeu de barres 14 permet de distribuer une puissance électrique délivrée par la source d'électricité 12 à des circuits électriques qui y sont raccordés. Pour cela, plusieurs groupes de connecteurs 16 sont raccordés au jeu de barres 14. Dans l'exemple, l'installation électrique 10 comprend six groupes de connecteurs 16. En pratique, le nombre de groupes de connecteurs 16 varie en fonction de la longueur du jeu de barres 14 et du nombre de circuits électriques devant être raccordés au jeu de barres. En outre, dans l'exemple, chaque groupe de connecteurs comprend cinq connecteurs électriques.

Le jeu de barres 14 est protégé à l'intérieur d'une goulotte électrique 18, autrement dit dans une « canalisation ». De préférence, cette goulotte électrique est réalisée en matériau polymère. Ainsi, la goulotte électrique est électriquement isolante. La goulotte électrique 18 porte également les groupes de connecteurs 16.

Le jeu de barres 14 et la goulotte électrique 18 s'étendent selon un axe longitudinal X14. Sur la figure 1, l'axe longitudinal X14 est horizontal. En pratique, selon les spécificités de l'installation électrique 10, l'axe longitudinal X14 est horizontal, vertical, ou de toute autre orientation.

La source d'électricité 12 est fixée à une première extrémité du jeu de barres 14 et de la goulotte électrique 18, selon l'axe X14. À l'extrémité opposée de la goulotte électrique, l'extrémité du jeu de barres est apparente, ce qui permet d'y raccorder un deuxième jeu de barres et une deuxième goulotte électrique, de sorte à prolonger l'installation électrique 10. Lorsqu'une telle prolongation n'est pas nécessaire, un cache est alors installé sur l'extrémité opposée de la goulotte électrique, pour masquer l'extrémité du jeu de barres.

L'installation électrique 10 comprend également un coffret de dérivation 30, fixé sur la goulotte électrique 18 et permettant de relier le jeu de barres 14 à un circuit électrique non-représenté, afin d'alimenter ce circuit électrique.

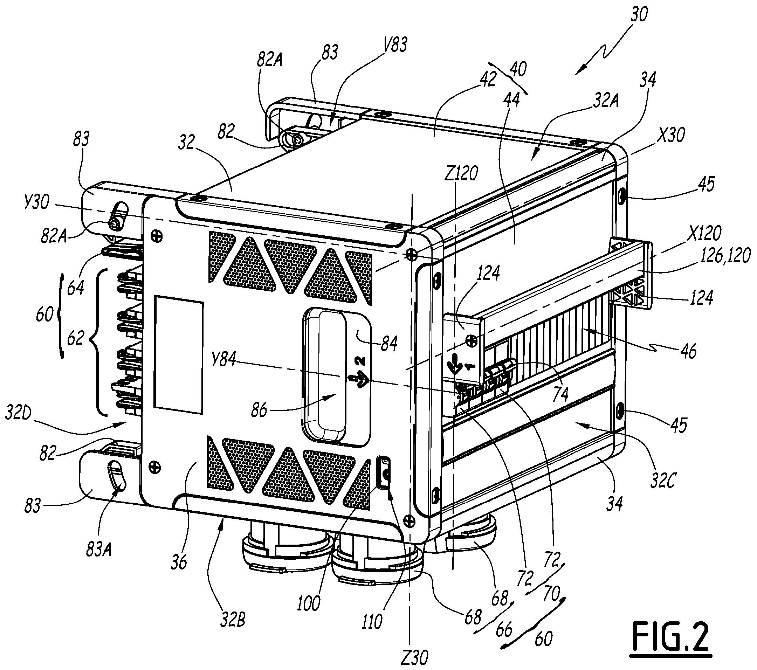

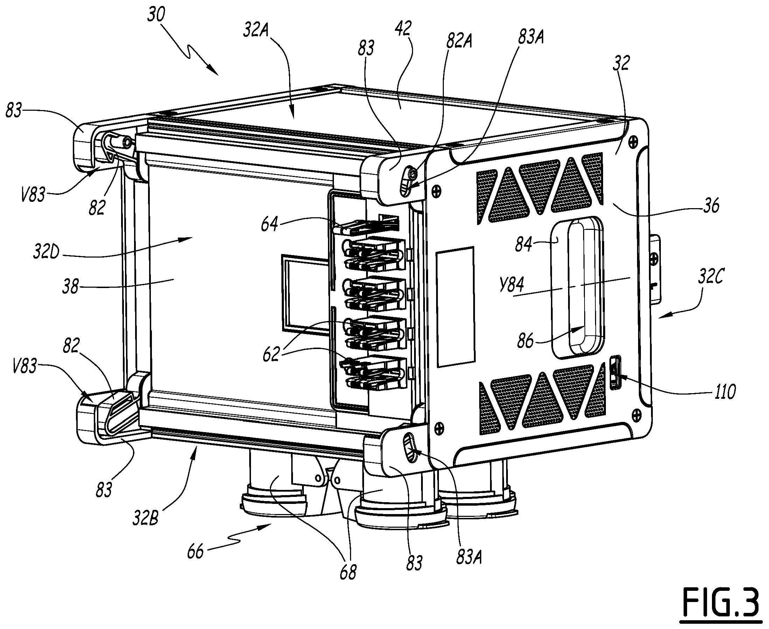

Le coffret de dérivation 30, mieux visible sur les figures 2 et 3, comprend un boîtier 32. Le boîtier 32 a globalement la forme d'un parallélépipède rectangle, et de préférence globalement une forme cubique. Ainsi, le boîtier 32 présente six côtés.

On note X30 un axe de largeur, Y30 un axe de profondeur et Z30 un axe de hauteur du coffret de dérivation.

Dans l'exemple représenté, le boîtier 32 comprend deux traverses 34 qui s'étendent parallèlement à l'axe X30 et un fond 38 qui s'étend parallèlement aux traverses 34 et qui forment ensemble une armature du boîtier.

Avantageusement, lorsque le coffret de dérivation est fixé sur la goulotte électrique 18, l'axe de largeur X30 du coffret est parallèle à l'axe longitudinal X14 du jeu de barres 14.

Le boîtier 32 comprend deux joues 36, parallèles entre elles. Les joues 36 sont planes et globalement rectangulaires, et avantageusement globalement carrées, avec des découpes. Les traverses 34 s'étendent entre les deux joues 36 et sont avantageusement disposées au niveau de deux coins adjacents des joues. Le fond 38 s'étend entre les deux joues 36, avantageusement entre deux coins adjacents des joues, à l'opposé des traverses 34. Ainsi, les joues 36 ferment deux des six côtés du boîtier 32. Les joues 36 sont situées de part et d'autre du boîtier 32, selon l'axe de largeur X30.

Les quatre côtés du boîtier 32 n'étant pas fermés par les joues 36 sont notés 32A, 32B, 32C et 32D et correspondent respectivement au côté supérieur, inférieur, avant et arrière du boîtier 32, selon l'orientation des figures 2 et 3.

Le fond 38 s'étendant entre les joues 36, il ferme l'un des côtés 32A, 32B, 32C et 32D du boîtier 32. Lorsque le coffret de dérivation est fixé sur la goulotte électrique 18, le fond 38 est parallèle avec la goulotte électrique, et de préférence en contact avec la goulotte électrique.

Dans l'exemple des figures 1 à 3, le fond 38 ferme entièrement le côté arrière 32D du boîtier.

En variante, le boîtier 32 comprend quatre traverses 34 qui s'étendent entre les joues 36 en étant disposées aux quatre coins des joues. Dans une telle variante, le fond 38 s'étend entre deux traverses 34 adjacentes, de sorte à fermer l'un des côtés 32A, 32B, 32C et 32D du boîtier.

Le fond 38 et les deux joues 36 ferment donc trois des six côtés du boîtier 32. Le boîtier 32 comprend ainsi trois ouvertures 39, chaque ouverture 39 correspondant à un côté du boîtier 32 s'étendant perpendiculairement aux joues entre deux traverses 34 ou entre une traverse et le fond 38.

Pour fermer les trois ouvertures 39, le boîtier 32 comprend trois plastrons 40, de forme rectangulaire, et perpendiculaires aux joues 36. Parmi les trois plastrons 40, deux sont parallèles entre deux et perpendiculaires au fond 38, et un est parallèle au fond 38. Chaque plastron 40 s'étend entre deux traverses 34 ou entre une traverse et le fond. Ainsi, les trois plastrons 40 ferment trois des six côtés du boîtier 32.

Les joues 36 et les plastrons 40 sont ainsi fixés sur l'armature du boîtier 32, c'est-à-dire sur les traverses 34 et sur le fond 38.

Grâce aux joues 36, au fond 38 et aux plastrons 40, le boîtier 32 est fermé, c'est-à-dire que l'intérieur du boîtier n'est pas accessible.

Dans l'exemple, deux des trois plastrons 40 sont des plastrons pleins 42, c'est-à-dire des plastrons ne présentant aucune ouverture. Dans l'exemple, ces deux plastrons pleins 42 sont parallèles entre eux et perpendiculaires au fond 38. Ainsi, les deux plastrons pleins 42 sont situés de part et d'autre du boîtier 32, selon l'axe de hauteur Z30.

Dans l'exemple, l'un des trois plastrons 40 est un plastron ajouré 44, c'est-à-dire qu'il comprend une fenêtre 46. Dans l'exemple, le plastron ajouré 44 est parallèle au fond 38. Ainsi, le fond et le plastron ajouré sont situés de part et d'autre du boîtier 32, selon l'axe de profondeur Y30.

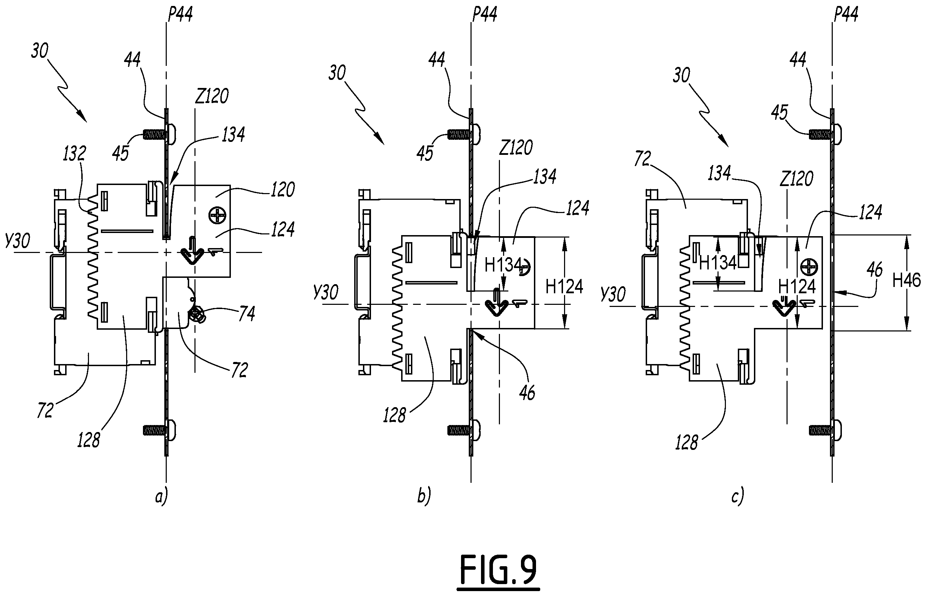

Comme visible sur les figures 2 et 9, le plastron ajouré 44 est fixé aux traverses 34 à l'aide de vis 45, dans l'exemple à l'aide de quatre vis 45.

De manière générale, les plastrons 40 sont fixés à l'armature du boîtier 32, c'est-à-dire aux traverses 34 et/ou au fond 38.

Le coffret de dérivation 30 comprend un système de distribution électrique 60.

Le système de distribution électrique 60 comprend des connecteurs électrique d'entrée 62, avantageusement disposés au niveau du fond 38 du boîtier 32.

Dans l'exemple, le système de distribution électrique comprend quatre connecteurs électrique d'entrée 62, prévus pour coopérer avec les connecteurs électriques d'un groupe de connecteurs 16. Ainsi, lorsque le coffret est fixé sur la goulotte électrique 18, un connecteur 62 est électriquement connecté à la barre d'alimentation du jeu de barres 14 reliée au neutre de la source d'électricité 12, par l'intermédiaire d'un connecteur d'un groupe de connecteurs 16, et trois autres connecteurs 62 sont chacun électriquement connectés à une barre d'alimentation du jeu de barres reliée à une phase de la source d'électricité, par l'intermédiaire d'un connecteur du même groupe de connecteurs 16. Grâce aux connecteurs 62, le coffret 30 est ainsi alimenté, dans l'exemple, en courant triphasé avec neutre.

Avantageusement, le système de distribution électrique 60 comprend également un connecteur de terre 64, prévu pour coopérer avec les connecteurs 16. Ainsi, lorsque le coffret 30 est fixé sur la goulotte électrique 18, le connecteur de terre 64 est électriquement connecté à la barre d'alimentation du jeu de barres 14 reliée à la terre.

Le système de distribution électrique 60 comprend un dispositif de distribution électrique de sortie 66, permettant d'alimenter un circuit électrique aval. Dans l'exemple, ce dispositif comprend quatre prises électriques 68. En variante, le dispositif comprend un nombre différent de prises électriques 68, par exemple une ou deux.

En pratique, le dispositif de distribution électrique de sortie 66 comprend toute combinaison de connecteurs et/ou de composants permettant d'alimenter en énergie électrique le circuit électrique aval. Ces connecteurs et/ou composant sont, par exemple, des câbles électriques, des prises électriques, des borniers, des cosses, et/ou des connecteurs. À titre d'exemple, le circuit électrique aval comprend des charges électriques qui sont par exemple des armoires électriques, des moteurs, des prises électriques, des borniers, des cosses et/ou des connecteurs.

Ainsi, le système de distribution électrique 60 permet d'alimenter en énergie électrique une ou plusieurs charges électriques raccordée(s) au dispositif de distribution électrique de sortie 66, à partir de l'alimentation fournie par le jeu de barres 14, par l'intermédiaire des connecteurs électriques d'entrée 62.

Le système de distribution électrique 60 comprend en outre un dispositif de coupure 70.

Le dispositif de coupure 70 est électriquement connecté d'une part aux connecteurs électriques d'entrée 62 et d'autre part au dispositif de distribution électrique de sortie 66.

Dans l'exemple, le dispositif de coupure 70 comprend quatre disjoncteurs 72.

Chaque disjoncteur 72 est commutable entre une configuration fermée et une configuration ouverte.

En configuration fermée, chaque disjoncteur 72 relie électriquement une prise électrique 68 du dispositif de distribution électrique de sortie 66 aux connecteurs électriques d'entrée 62. Ainsi, un disjoncteur 72 alimente une prise 68 du dispositif de distribution électrique de sortie 66.

En configuration ouverte, chaque disjoncteur 72 isole électriquement la prise 68 du dispositif de distribution électrique de sortie 66 des connecteurs électriques d'entrée 62.

Ainsi, de manière générale, le dispositif de coupure 70 est commutable entre une configuration fermée, dans laquelle tous les disjoncteurs 72 sont en configuration fermée, c'est-à-dire que le dispositif de coupure connecte les connecteurs électriques d'entrée 62 au dispositif de distribution électrique de sortie 66, et une configuration ouverte, dans laquelle tous les disjoncteurs 72 sont en configuration ouverte, c'est-à-dire que le dispositif de coupure isole les connecteurs électriques d'entrée du dispositif de distribution électrique de sortie.

En variante, le dispositif de coupure 70 est en configuration fermée lorsqu'au moins un disjoncteur 72 est en configuration fermée, c'est-à-dire qu'au moins une partie du dispositif de distribution électrique est alimenté.

Avantageusement, chaque disjoncteur 72 est relié d'une part aux connecteurs électriques d'entrée 62 et d'autre part au dispositif de distribution électrique 66 par des câbles électriques.

En outre, chaque disjoncteur 72 comprend un levier de commutation 74, mobile entre une position fermée dans laquelle le disjoncteur est en configuration fermée, et une position ouverte, dans laquelle le disjoncteur est en configuration ouverte.

Ici, à titre d'exemple, la configuration fermée d'un disjoncteur 72 correspond à la position de son levier de commutation basculée du côté du plastron 42 visible en partie supérieure des figures 2 et 3.

Les leviers de commutation 74 sont prévus pour être actionnables à la main par un utilisateur entre leur position fermée et leur position ouverte.

Lorsqu'ils sont destinés à être commutés simultanément, les leviers de commutation 74 des quatre disjoncteurs 72 forment ensemble un levier de commutation du dispositif de coupure 70.

Les disjoncteurs 72 sont essentiellement disposés à l'intérieur du boîtier 32, sur le côté du boîtier comprenant le plastron ajouré 44, de sorte que les leviers de commutation 74 s'étendent en-dehors du boîtier 32, au travers de la fenêtre 46 du plastron ajouré. Les leviers de commutation peuvent donc être commutées depuis l'extérieur du boîtier 32. En d'autres termes, les disjoncteurs 72 sont disposés à proximité d'une ouverture 39 du boîtier.

Dans l'exemple, les disjoncteurs 72 sont donc disposés sur le côté du boîtier parallèle au fond 38. En variante, les disjoncteurs sont disposés sur un côté du boîtier perpendiculaire au fond 38 et aux joues 36.

De plus, les disjoncteurs 72 sont, à titre d'exemple, disposés au plus proche de l'une des deux joues 36.

Dans l'exemple, le dispositif de coupure 70 comprend avantageusement un bloc inerte 76, disposé de manière adjacente aux disjoncteurs 72, selon l'axe de largeur X30. Le bloc inerte 76 permet de remplir l'espace laissé libre entre les disjoncteurs 72 et la joue 36 la plus éloignée des disjoncteurs 72, de sorte que l'intérieur du boîtier 32 n'est pas apparent au travers de la fenêtre 46 du plastron ajouré 44. Ainsi, la largeur cumulée des disjoncteurs 72 et du bloc inerte 76 est sensiblement égale à la largeur de la fenêtre 46, les largeurs étant mesurées selon l'axe de largeur X30.

Le coffret de dérivation 30 comprend un mécanisme de verrouillage 80.

Le mécanisme de verrouillage 80 permet de fixer, et de verrouiller, le coffret de dérivation 30 au jeu de barres 14 et à la goulotte électrique 18.

Pour cela, le mécanisme de verrouillage 80 comprend des crochets 82, dans l'exemple quatre crochets, montés mobiles par rapport au boîtier 32 entre une position de verrouillage, dans laquelle le boîtier est fixé, et verrouillé, sur le jeu de barres 14, et une position de déverrouillage, dans laquelle le boîtier n'est pas verrouillé sur le jeu de barres, et est détachable du jeu de barres.

Dans l'exemple, les crochets 82 sont montés pivotants par rapport au boîtier 32.

Dans l'exemple, les crochets s'étendent depuis les joues 36 du boîtier 32, selon l'axe de profondeur Y30 du boîtier, en s'éloignant du fond 38 et du plastron ajouré 44.

Dans l'exemple, chaque joue 36 porte deux crochets 82, disposés aux deux extrémités de la joue, selon l'axe de hauteur Z30.

Chaque crochet 82 est logé dans un volume V83 en forme de dièdre rentrant défini par une équerre 83 qui s'étend à l'opposé du plastron ajouré 44, à partir d'un des coins du fond 38, parallèlement à l'axe Y30. Chaque crochet 82 est ainsi protégé mécaniquement quand le coffret de dérivation 30 est séparé du jeu de barres 14. En particulier, les volumes V83 permettent de protéger les crochets 82 lorsque le coffret de dérivation 30 est transporté ou posé sur un plan de travail.

Chaque équerre 83 est pourvue d'une encoche 83A, et deux de ces équerres reçoivent un pion de repérage 82A solidaire du crochet 82 reçu dans son volume V83. En d'autres termes, deux crochets 82 comprennent des pions de repérage 82A reçus dans des encoches 83A.

En pratique, les deux équerres recevant les pions de repérage 82A sont alignées selon l'axe de largeur X30, c'est-à-dire qu'elles sont situées de part et d'autre du fond 38, et ces deux équerres sont les deux équerres les plus proches du connecteur de terre 64, selon l'axe de hauteur Z30. Les pions de repérage 82A permettent ainsi de repérer la position du connecteur de terre 64 parmi le système de distribution électrique 60, ce qui facilite le positionnement du coffret de dérivation 30 et son alignement avec le groupe de connecteurs 16 du jeu de barres 14 lors de l'installation du coffret sur le jeu de barres.

Les crochets 82 sont montrés en position de verrouillage à la figure 2, et en position de déverrouillage à la figure 3.

En variante, le mécanisme de verrouillage 80 comprend d'autres moyens de verrouillage sur le jeu de barres 14, comme par exemple des loquets, en remplacement des crochets 82.

Le mécanisme de verrouillage 80 comprend également des poignées 84. Dans l'exemple, le mécanisme de verrouillage comprend deux poignées et chaque joue 36 porte une poignée 84.

Les poignées 84 sont manœuvrables depuis l'extérieur du boîtier 32.

Les poignées 84 sont mobiles en translation selon un axe de poignée Y84 parallèle à l'axe de profondeur Y30 du coffret de dérivation 30, entre une position de verrouillage, dans laquelle les crochets 82 sont en position de verrouillage, et une position de déverrouillage, dans laquelle les crochets sont en position de déverrouillage.

Autrement dit, les poignées sont mobiles dans un mouvement d'éloignement-rapprochement du fond 38 entre leur position de verrouillage et leur position de déverrouillage.

En pratique, les poignées 84 sont guidées en translation par les joues 36, au moyen de nervures 36A ménagées sur les faces internes des joues 36 et contre lesquelles glissent les poignées 84.

En outre, dans l'exemple, les poignées sont en position de verrouillage lorsqu'elles sont rapprochées du fond 38 et sont en position de déverrouillage lorsqu'elles sont éloignées du fond 38.

Dans l'exemple, chaque poignée 84 permet d'entraîner le mouvement de deux crochets 82.

Comme visible aux figures 2 et 3, chaque poignée 84 comprend une cavité externe 86, permettant la prise en main de la poignée par un utilisateur afin de faciliter son déplacement entre les positions de verrouillage et de déverrouillage.

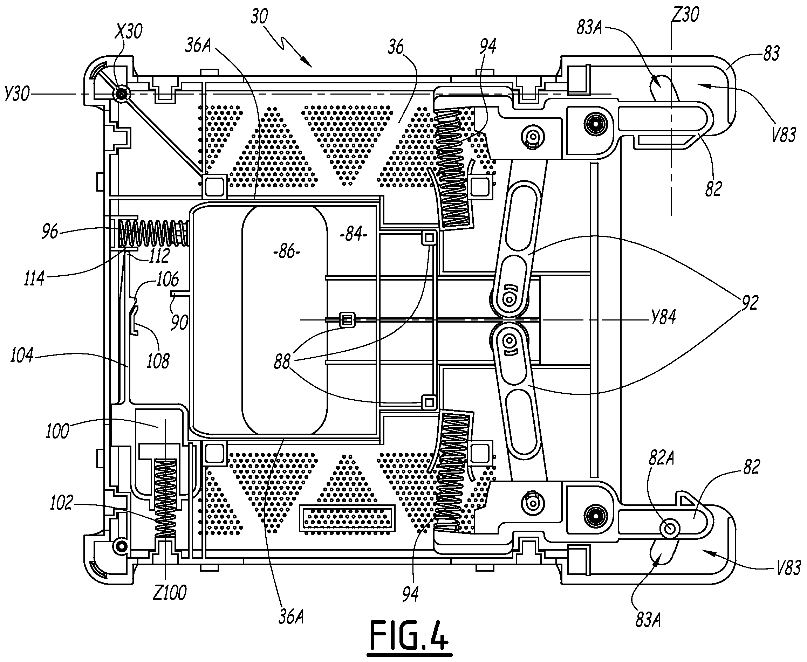

De plus, comme visible aux figures 4, 5 et 6, chaque poignée 84 comprend trois pions 88, et, avantageusement, un taquet 90.

Dans l'exemple, les trois pions 88 sont disposés en triangle, c'est-à-dire qu'un pion 88 est disposé au centre de la poignée, autrement dit sur l'axe de poignée Y84, qui est avantageusement un axe de symétrie de la poignée, et que deux pions 88 sont disposés de part et d'autre de l'axe de poignée Y84. La poignée comprend ainsi un pion central et deux pions périphériques.

Sur les figures 4, 5 et 6, seule une joue 38 ainsi qu'une partie du mécanisme de verrouillage 80 sont représentés, en pratique les crochets 82 et la poignée 84 portés par cette joue. En outre, sur ces figures, la joue et le mécanisme de verrouillage sont vus depuis l'intérieur du coffret de dérivation 30. Ainsi, les pions 88 sont visibles sur ces figures, mais ne sont pas visibles depuis l'extérieur du boîtier 32.

Comme visible sur les figures 4, 5 et 6, le mécanisme de verrouillage 80 comprend des bras 92 de transmission d'effort. Chaque bras de transmission est relié d'une part à la poignée 84 et d'autre part à un crochet 82. Ainsi, chaque bras de transmission permet d'entraîner le pivotement d'un crochet à partir de la translation de la poignée.

Avantageusement, le mécanisme de verrouillage comprend des organes de rappel élastiques 94, dans l'exemple quatre ressorts, qui exercent chacun un effort élastique sur un crochet 82, par rapport au boîtier 32, cet effort tendant à basculer les crochets en position de verrouillage. Ainsi, la position de verrouillage des crochets est une position stable.

En pratique, le mécanisme de verrouillage comprend autant d'organes de rappel élastiques 94 que de crochets 82.

Avantageusement, le mécanisme de verrouillage comprend des organes de rappel élastique 96, dans l'exemple deux ressorts, qui exercent chacun un effort élastique sur une poignée 84, par rapport au boîtier 32, tendant à repousser les poignées en position de verrouillage. Ainsi, la position de verrouillage des poignées est une position stable.

En pratique, le mécanisme de verrouillage comprend autant d'organes de rappel élastiques 96 que de poignées 84.

Grâce aux ressorts 94 et 96, l'actionnement des poignées 84 par un utilisateur est nécessaire pour translater les poignées 84 et les crochets 82 en position de déverrouillage. Ainsi, le coffret de dérivation 30 ne peut être déverrouillé et démonté du jeu de barres 14 que lorsque les poignées sont maintenues en position de déverrouillage par un utilisateur.

Le mécanisme de verrouillage 80 comprend deux loquets de verrouillage 100, mobiles entre une position de verrouillage, dans laquelle les loquets de verrouillage empêchent le déplacement des poignées 84 de leur position de verrouillage vers leur position de déverrouillage, et une position de déverrouillage, dans laquelle les loquets de verrouillage n'empêchent pas le déplacement des poignées.

En pratique, et comme visible sur les figures 4 à 6, chaque joue 36 porte un loquet de verrouillage 100, disposé avantageusement à l'intérieur du boîtier 32, et chaque loquet de verrouillage permet de bloquer le déplacement d'une poignée 84. Ainsi, chaque loquet est associé à une poignée.

Dans l'exemple, chaque loquet de verrouillage 100 est mobile en translation selon un axe de loquet Z100, perpendiculairement à l'axe de poignée Y84 et avantageusement parallèle à l'axe de hauteur Z30 du coffret.

Dans l'exemple, chaque loquet 100 est prévu pour, lorsqu'il est en position de verrouillage, être en contact avec une poignée 84 afin d'empêcher son déplacement. Autrement dit, les poignées peuvent être bloquées en position de verrouillage par les loquets de verrouillage.

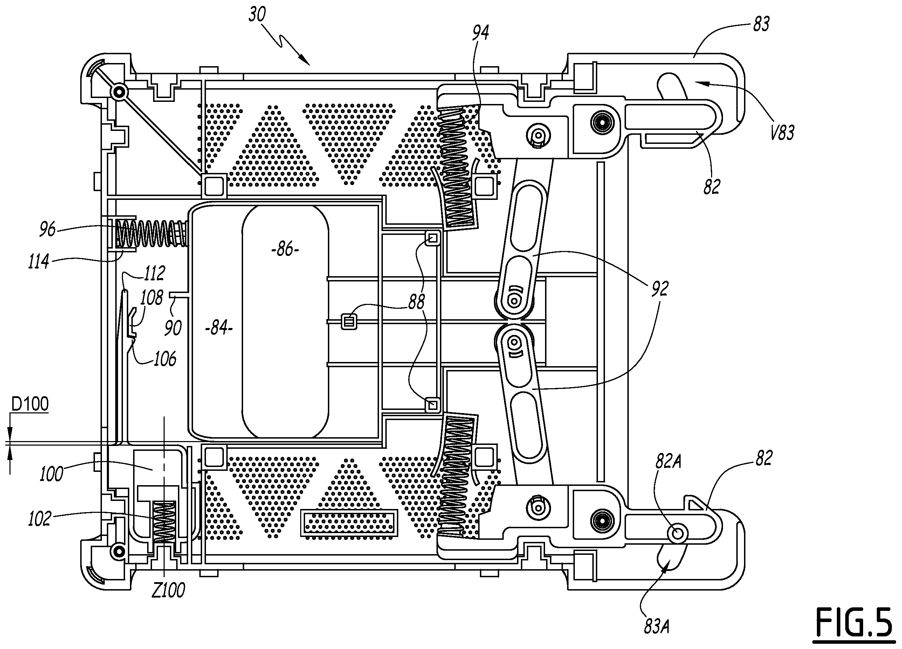

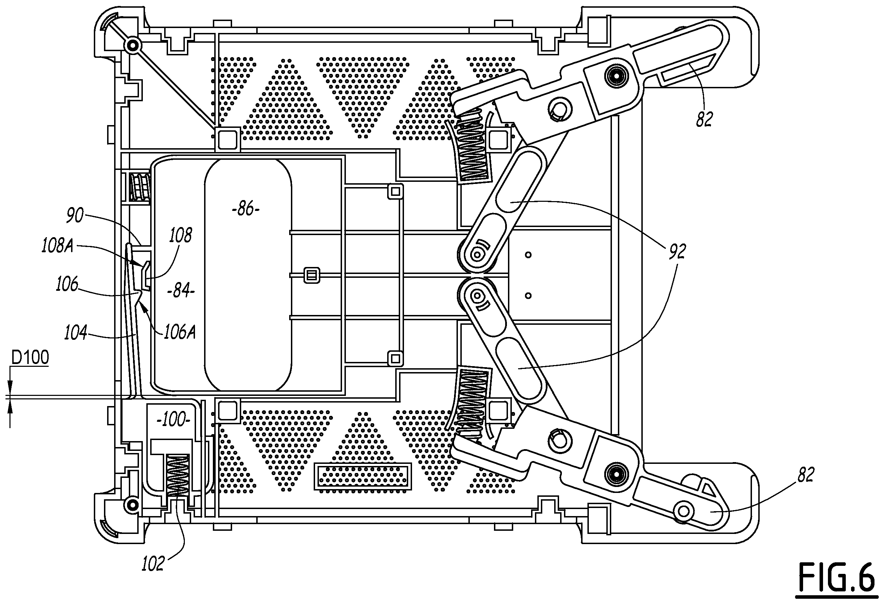

Lorsqu'un loquet de verrouillage 100 est en position de déverrouillage, il est éloigné de la poignée 84 associée, d'une distance D100 non-nulle, mesurée selon l'axe de loquet Z100. Cette position est illustrée aux figures 5 et 6.

Le mécanisme de verrouillage 80 comprend des organes de rappel élastique 102, dans l'exemple deux ressorts 102. Dans l'exemple, chaque ressort 102 exerce un effort élastique sur un loquet de verrouillage 100, par rapport au boîtier 32, tendant à translater les loquets de verrouillage en position de verrouillage.

Avantageusement, chaque loquet de verrouillage comprend une tige 104, qui s'étend selon l'axe de loquet Z100 et qui comprend un ergot 106.

L'ergot 106 d'une tige 104 est prévu pour coopérer avec un cran de blocage 108 qui fait partie du boîtier 32, de sorte à bloquer la position du loquet de verrouillage 100 selon l'axe Z100. Dans l'exemple, le boîtier 32 comprend alors deux crans de blocage 108, portés par les faces internes des deux joues 36.

Ainsi, lorsqu'un loquet de verrouillage 100 est en position de déverrouillage, il est maintenu dans cette position par blocage de l'ergot 106 contre le cran de blocage 108, malgré l'effort exercé par le ressort 102, par des surfaces globalement perpendiculaires à l'axe Z100, comme visible à la figure 5.

Lorsqu'un loquet de verrouillage 100 est en position de verrouillage, il est maintenu dans cette position sous l'effet de l'effort exercé par le ressort 102 et, avantageusement, par blocage de la pointe 112 de la tige 104, qui est en butée contre une nervure 114 du boîtier 32, comme visible à la figure 4.

Chaque loquet de verrouillage 100 est en outre accessible au travers d'une ouverture 110 ménagée dans le boîtier 32. Ainsi, le boîtier 32 comprend deux ouvertures 110, qui sont, dans l'exemple, ménagées dans les deux joues 36.

Les loquets de verrouillage 100 sont prévus pour être manœuvrés de leur position de verrouillage vers leur position de déverrouillage par un utilisateur, au travers des ouvertures 110. Par exemple, un utilisateur peut exercer un effort sur un loquet de verrouillage, de préférence à l'aide d'un outil pour une raison de sécurité et normative, comme par exemple un tournevis à pointe plate, de sorte à déplacer le loquet selon l'axe Z100 jusqu'à sa position de déverrouillage, à l'encontre de l'effort élastique exercé par le ressort 102. En pratique, l'effort exercé par un utilisateur est suffisant pour faire glisser une surface inclinée 106A de l'ergot 106 contre une surface inclinée 108A du cran de blocage 108. En outre, au cours de ce mouvement, le ressort 102 est progressivement compressé. À l'issu de ce mouvement, le loquet de verrouillage est maintenu en position de déverrouillage par le blocage de l'ergot 106 contre le cran de blocage 108.

Lorsqu'un loquet de verrouillage est en position de déverrouillage, la poignée 84 disposée dans la même joue 36 est déplaçable jusqu'à sa position de déverrouillage. Ainsi, les deux loquets de verrouillage 100 doivent être en position de déverrouillage pour pouvoir déverrouiller le coffret 30 du jeu de barres 14.

Lorsqu'une poignée 84 est translatée jusqu'en position de déverrouillage par un utilisateur, son taquet 90 entre en contact avec la tige 104 du loquet de verrouillage associé, jusqu'à déformer de manière élastique la tige. Cette configuration est visible à la figure 6.

Cette déformation élastique permet d'éloigner l'ergot 106 du cran de blocage 108, c'est-à-dire de désengager l'ergot du cran de blocage. Ainsi, lorsque la tige 104 est déformée, l'ergot 106 n'est pas bloqué contre le cran de blocage 108, ce qui permet au loquet de verrouillage 100 d'être entraîné en mouvement le long de l'axe Z100, sous l'effet du ressort 102. Le loquet de verrouillage est alors déplacé en direction de la poignée 84, jusqu'à entrer en contact avec la poignée, qui est située, selon l'axe de loquet Z100, en regard du loquet, c'est-à-dire jusqu'à ce que la distance D100 soit égale à zéro. Le loquet est alors situé entre sa position de verrouillage et sa position de déverrouillage, et est maintenu contre la poignée sous l'effet du ressort 102.

Lorsque la poignée 84 est relâchée par l'utilisateur, elle se déplace en translation jusqu'en position de verrouillage sous l'effet de l'un des deux ressorts 96, jusqu'à ne plus empêcher le déplacement du loquet de verrouillage 100 vers sa position de verrouillage, c'est-à-dire jusqu'à ne plus être située en regard du loquet, selon l'axe de loquet Z100. Le loquet de verrouillage translate alors en position de verrouillage, sous l'effet du ressort 102.

En d'autres termes, le taquet 90 permet de désengager l'ergot 106 du cran de blocage 108, de sorte que le loquet de verrouillage est automatiquement ramené en position de verrouillage sous l'effet du ressort 102, même si ce retour en position de verrouillage ne s'effectue que dans un second temps, après le relâchement de la poignée 84.

Ainsi, le déplacement en translation des loquets de verrouillage 100 en position de déverrouillage s'effectue par un utilisateur, avant l'actionnement des poignées 84 vers leur position de déverrouillage, et le déplacement en translation des loquets en position de verrouillage s'effectue sans intervention d'un utilisateur, dès que les poignées 84 sont relâchées et ramenées en position de verrouillage.

Le mécanisme de verrouillage 80 comprend une barre de sécurité 120, mobile entre une position de verrouillage, dans laquelle la barre de sécurité empêche le déplacement des poignées 84 de leur position de verrouillage vers leur position de déverrouillage, et une position de déverrouillage, dans laquelle la barre de sécurité n'empêche pas le déplacement des poignées et dans laquelle l'ensemble des disjoncteurs 72 sont commutés en configuration ouverte, c'est-à-dire dans laquelle le dispositif de coupure 70 est commuté en configuration ouverte.

La barre de sécurité 120 s'étend selon un axe longitudinal X120 parallèle à l'axe X30.

Avantageusement, la barre de sécurité 120 est mobile en translation, selon un axe de translation de barre Z120 parallèle au plastron ajouré 44 à proximité duquel les disjoncteurs 72 sont installés. L'axe de translation de barre Z120 est en outre perpendiculaire à l'axe de largeur X30 du coffret de dérivation 30. Dans l'exemple, l'axe de translation de barre Z120 est parallèle à l'axe de hauteur Z30 du coffret et perpendiculaire à l'axe de poignée Y84.

Comme mieux visible aux figures 2, 7, 8 et 9, en pratique, la barre de sécurité 120 s'étend partiellement en-dehors du boîtier 32, et est manœuvrable, depuis l'extérieur du boîtier, par un utilisateur entre ses positions de verrouillage et de déverrouillage.

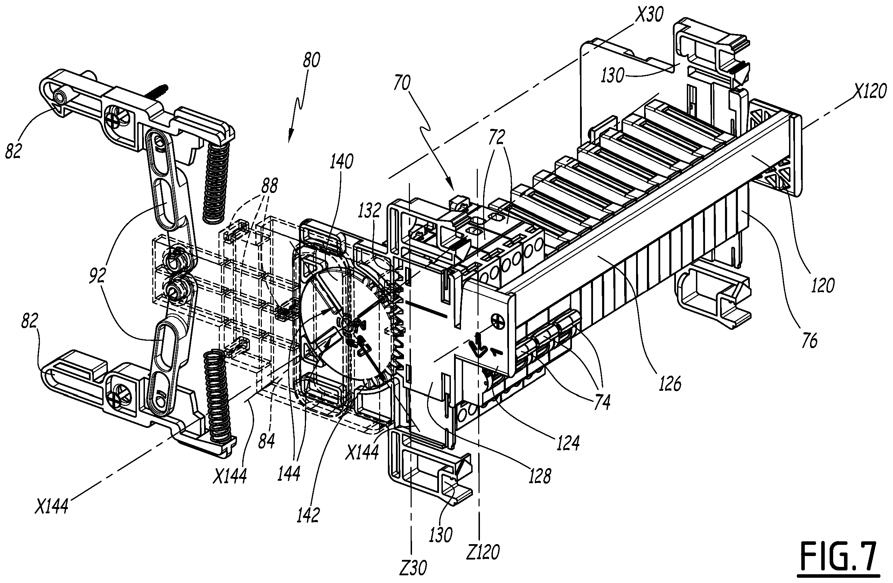

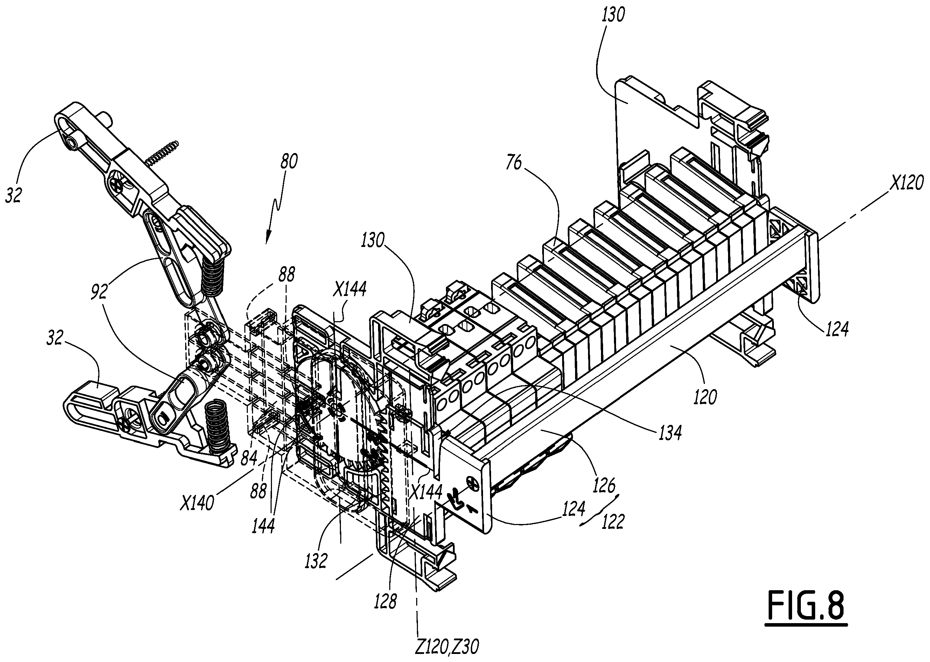

Sur les figures 7 et 8, seules une partie du mécanisme de verrouillage 80 et une partie du système de distribution électrique 60, et notamment le dispositif de coupure 70, sont représentées. De plus, sur ces figures, les poignées 84 sont représentées en transparence, ce qui est figuré par des pointillés.

Sur la figure 9, seuls le plastron ajouré 44, la barre de sécurité 120 et une partie du système de distribution électrique 60, et notamment le dispositif de coupure 70, sont représentés.

La barre de sécurité 120 comprend une partie externe 122, comprenant deux ailes externes 124 et une tige 126, chaque aile externe 124 étant disposée à proximité d'une joue 36 et la tige 126 s'étendant entre les ailes externes sur toute la largeur du plastron ajouré 44, parallèlement à l'axe de largeur X30 et selon l'axe longitudinal X120. Ainsi, la partie externe 122 s'étend avantageusement à l'extérieur du boîtier 32.

La barre de sécurité 120 comprend également deux ailes internes 128, formant ensemble une partie interne de la barre de sécurité, chaque aile interne étant portée par un support 130 du mécanisme de verrouillage 80, le support 130 étant porté par une joue. Une seule aile interne est visible sur les figures, mais la position de l'autre aile interne se déduit de la symétrie globale de la barre de sécurité 120 par rapport à un plan perpendiculaire à l'axe X120 et médian entre les ailes externes 124. De plus, chaque aile interne 128 s'étend, parallèlement à l'axe Y30, dans le prolongement d'une aile externe 124 à l'intérieur du boîtier 32.

Avantageusement, chaque support 130 est encliqueté dans une joue 36.

En pratique, la partie externe 122 s'étend depuis la partie interne de la barre de sécurité au travers de la fenêtre 46 du plastron ajouré 44.

En pratique, la translation de la barre de sécurité 120 entre ses positions de verrouillage et de déverrouillage est guidée par les supports 130, sur lesquels les ailes internes 128 coulissent et son guidées par coopération de forme.

Avantageusement, chaque aile interne 128 comprend une crémaillère 132, qui s'étend parallèlement à l'axe de translation de barre Z120.

Avantageusement, des fentes 134 sont ménagées entre les ailes internes 128 et les ailes externes 124.

Avantageusement, lorsque la barre de sécurité 120 est basculée de sa position de verrouillage vers sa position de déverrouillage et lorsqu'un ou plusieurs leviers de commutation 74 des disjoncteurs 72 sont en position fermée, la tige 126 de la partie externe 122 entre en contact avec ces leviers de commutation, ce qui entraîne leur basculement en position ouverte. En d'autre termes, la tige 126 impacte les leviers de commutation. De plus, lorsque la barre de sécurité est en position de déverrouillage, le basculement des leviers de commutation 74 en position fermée est empêché, par blocage contre la tige 126 de la partie externe 122. Ainsi, lorsque la barre de sécurité 120 est en position de déverrouillage, le dispositif de coupure 70 est en configuration ouverte.

La barre de sécurité 120 permet donc de basculer le dispositif de coupure 70 en configuration ouverte de manière simple et rapide, en abaissant sa tige 126 de la position haute représentée à la figure 7 et sur l'insert a) de la figure 9 à la position basse représentée à la figure 8 et sur les inserts b) et c) de la figure 9.

Le mécanisme de verrouillage 80 comprend un dispositif de blocage 140, entraîné par la barre de sécurité 120. Le dispositif de blocage est prévu pour bloquer la translation des poignées 84 lorsque la barre de sécurité 120 est en position de verrouillage, et pour ne pas bloquer la translation des poignées lorsque la barre de sécurité est en position de déverrouillage.

Avantageusement, le dispositif de blocage 140 comprend deux roues dentées, mobiles en rotation, par rapport au boîtier 32, autour d'un axe de roue X140 perpendiculaire à l'axe de translation de barre Z120 et perpendiculaire à l'axe de poignée Y84. Sur les figures 7 et 8, une seule roue dentée 140 est représentée.

Les roues dentées 140 sont, en pratique, montées pivotantes sur les supports 130, et sont ainsi portées par les joues 36. Ainsi, chaque roue dentée 140 est associée à une joue 36 et à une poignée 84.

Les supports 130 portent donc la barre de sécurité 120 et les roues dentées 140, qui sont assemblés ensemble.

Chaque roue dentée 140 comprend, sur sa surface périphérie S140, plusieurs dents 142 engagées avec la crémaillère 132 d'une aile interne 128 de la barre de sécurité 120. Ainsi, une translation de la barre de sécurité autour de l'axe Z120 entraîne une rotation des roues dentées 140 autour de l'axe Z140.

Chaque roue dentée 140 comprend deux gorges 144, qui s'étendent depuis sa surface périphérique S140 en direction de l'axe de roue X140. En d'autres termes, les gorges 144 s'étendent selon des axes de gorge X144 radiaux par rapport à l'axe de roue X140. De plus, les deux gorges 144 s'étendent selon des axes de gorge X144 perpendiculaires entre eux, c'est-à-dire séparés par un secteur angulaire d'angle égal à 90°.

La roue dentée 140 portée par une joue 36 est alignée, selon l'axe de largeur X30, avec les pions 88 de la poignée 84 associée à cette roue dentée.

Pour chaque roue dentée, lorsque la barre de sécurité 120 est en position de verrouillage, les deux gorges 144 s'étendent selon des axes de gorge X144 sécants, mais non perpendiculaires, avec l'axe de poignée Y84. Dans cette position, la poignée 84 associée à une roue dentée est bloquée en position de verrouillage, car l'un des pions 88 de la poignée est en contact avec la surface périphérique S140 de la roue dentée. Dans l'exemple et comme visible à la figure 7, ce pion est le pion central de la poignée. Ce pion 88 étant en butée contre la surface périphérique S140, il ne peut pas s'engager dans une gorge 144 et la poignée est empêchée de translater en position de déverrouillage. En outre, dans cette configuration, les autres pions 88 de la poignée sont en décalage avec la roue dentée. Par « en décalage », on entend que la projection des pions 88 sur un axe perpendiculaire à l'axe de poignée X84 et perpendiculaire à l'axe de roue X140, c'est-à-dire, dans l'exemple, sur un axe parallèle à l'axe Z30, n'a aucune intersection avec la projection de la roue dentée sur ce même axe. Dans l'exemple, les deux autres pions 88 sont les pions périphériques et sont situés de part et d'autre de la roue dentée, selon l'axe Z30.

Pour chaque roue dentée, lorsque la barre de sécurité 120 est en position de déverrouillage, une première gorge 144 s'étend selon un axe de gorge X144 parallèle à l'axe de poignée Y84 et une deuxième gorge s'étend selon un axe de gorge perpendiculaire à l'axe de poignée. Dans cette position, la poignée 84 associée à une roue dentée peut basculer de sa position de verrouillage vers sa position de déverrouillage, car deux des trois pions 88 sont en décalage avec la roue dentée et le troisième pion 88, correspondant au pion qui est en butée contre la surface périphérique S140 lorsque la barre de sécurité 120 est en position de verrouillage, est aligné avec la gorge 144 s'étendant parallèlement à l'axe de poignée Y84. Ainsi, ce pion peut s'engager dans cette gorge 144, et n'empêche pas le déplacement de la poignée de sa position de verrouillage vers sa position de déverrouillage.

Sur l'insert a) de la figure 9, la barre de sécurité 120 est montrée en position de verrouillage et les leviers de commutation 74 sont représentés en position ouverte. Sur les inserts b) et c) de la figure 9, la barre de sécurité est montrée en position de déverrouillage. Sur ces deux inserts, la barre de sécurité masque les leviers de commutation 74.

Lorsque la barre de sécurité est en position de verrouillage, le plastron ajouré 44 s'engage dans les fentes 134 ménagées entre les ailes internes 128 et les ailes externes 124 de la barre de sécurité. Dans cette configuration, le démontage du plastron ajouré est impossible, même après retrait des vis 45, car le déplacement du plastron dans le plan du plastron, noté P44, est empêché par son contact avec l'armature du caisson 32, plus précisément avec les traverses 34, et avec la barre de sécurité 120, comme mieux visible à la figure 2, et le déplacement du plastron perpendiculairement au plan du plastron P44, c'est-à-dire dans une direction d'éloignement du coffret 30, est empêché par le contact du plastron avec les ailes externes 124 de la barre de sécurité, au niveau de la fente 134.

Le plan du plastron P44 est parallèle à l'axe de translation de barre Z120. En outre, dans l'exemple, ce plan est perpendiculaire à l'axe de profondeur Y30. Ainsi, dans l'exemple, la direction d'éloignement du coffret 30 est selon l'axe de profondeur Y30.

Lorsque la barre de sécurité est en position de déverrouillage, la projection de la partie externe 122 de la barre de sécurité, c'est-à-dire des ailes externes 124 et de la tige 126, dans le plan du plastron P44, est contenue dans la fenêtre 46 du plastron ajouré. En d'autres termes, le plastron ajouré 44 ne s'engage pas dans les fentes 134. Ainsi, dans cette configuration, le démontage du plastron ajouré est rendu possible par un mouvement de translation du plastron ajouré perpendiculaire au plan du plastron, c'est-à-dire dans une direction d'éloignement du coffret 30, parallèlement à l'axe Y30. Au cours de ce mouvement de translation, la partie externe 122 de la barre de sécurité passe à l'intérieur de la fenêtre 46.

Ainsi, le plastron ajouré 44 n'est démontable que lorsque la barre de sécurité 120 est en position de déverrouillage.

En outre, le plastron ajouré 44 est particulièrement simple à démonter, car son démontage ne nécessite que le basculement de la barre de sécurité en position de déverrouillage et le retrait des vis 45.

Avantageusement, les fentes 134 ont une hauteur H134, mesurée dans le plan du plastron P44 selon l'axe de translation de barre Z120, au moins égale à 50% de la hauteur H124 des ailes externes 124. Ainsi, le plastron s'engage profondément dans les fentes 134, ce qui rend plus fiable le blocage du déplacement de la translation du plastron perpendiculairement au plan du plastron P44 par la barre de sécurité 120.

Avantageusement, la hauteur H46 de la fenêtre 46 du plastron ajouré, mesurée dans le plan du plastron P44 selon l'axe de translation de barre Z120, est sensiblement égale, au jeu de fonctionnement près, à la hauteur H124 des ailes externes 124. De manière générale, la hauteur de la partie externe 122 de la barre de sécurité 120 est sensiblement égale à la hauteur de la fenêtre 46, sans être supérieure.

En variante, la hauteur de la partie externe 122 de la barre de sécurité 120 est strictement inférieure à la hauteur H46 de la fenêtre 46.

Le fait que les poignées 84 sont manœuvrables depuis l'extérieur du coffret de dérivation 30 est particulièrement avantageux, car cela permet de monter et de démonter le coffret de dérivation du jeu de barres 14 sans avoir à accéder à l'intérieur du coffret, c'est-à-dire sans avoir à démonter l'un des plastrons 40, notamment le plastron ajouré 44.

Grâce à la barre de sécurité 120, l'actionnement des poignées 84 n'est possible que lorsque le dispositif de coupure 70 est en configuration ouverte, ce qui est particulièrement avantageux. En effet, le démontage du coffret de dérivation 30 est ainsi sécurisé, car il n'est pas possible de le démonter le coffret de dérivation du jeu de barres 14 lorsque les circuits électriques qui y sont raccordés sont électriquement alimentés.

Le fait que le plastron ajouré 44 soit démontable uniquement lorsque la barre de sécurité 120 est en position de déverrouillage est particulièrement avantageux, car cela permet d'accéder à l'intérieur du coffret de dérivation 30 uniquement lorsque le dispositif de coupure est en configuration ouverte, ce qui est plus sécurisé. En effet, cela permet d'empêcher l'accès à l'intérieur du coffret lorsque les raccordements électriques du dispositif de distribution électrique de sortie 66 sont sous tension. Grâce à ce système, il est possible d'effectuer des opérations de maintenance à l'intérieur du coffret 30 simplement et en sécurité. En outre, le plastron ajouré 44 est plus simple et moins onéreux à mettre en œuvre qu'une porte, ce qui facilite la fabrication du coffret de dérivation 30 ainsi que son coût.

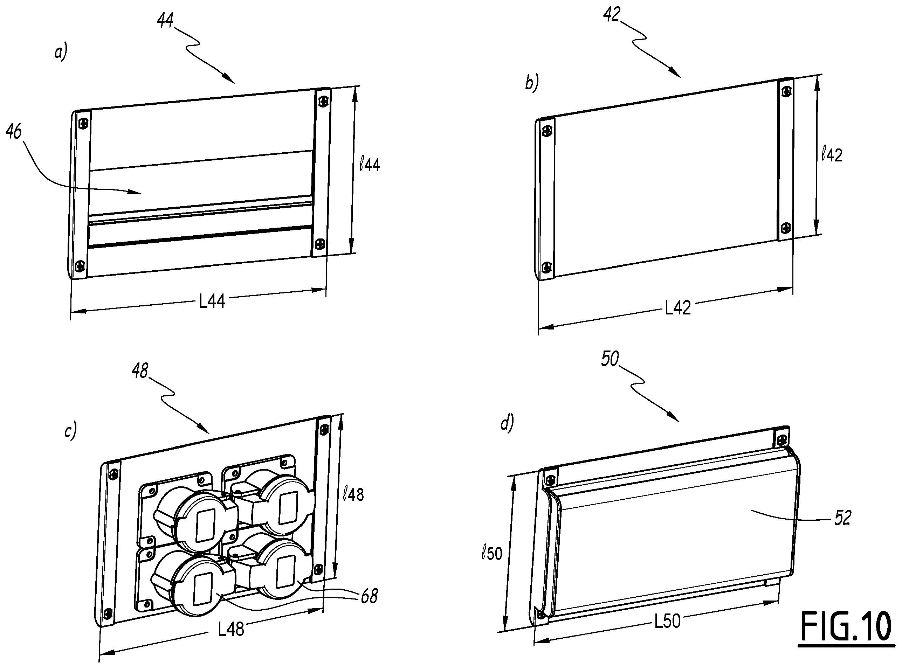

Sur chaque insert de la figure 10, repérés a) à d), il est représenté un plastron 40 pouvant appartenir au coffret de dérivation 30.

Sur l'insert a), le plastron ajouré 44 est représenté. On note « L44 » sa longueur et « ℓ44 » sa largeur.

Sur l'insert b), le plastron plein 42 est représenté. On note « L42 » sa longueur et « ℓ42 » sa largeur.

Sur l'insert c), un plastron de connexion 48 est représenté. Ce plastron est en pratique un plastron supportant le dispositif de distribution électrique 66 d'un coffret de dérivation. Dans l'exemple représenté à l'insert c), le plastron de connexion 48 porte ainsi quatre prises électriques 68. En outre, le coffret de dérivation des figures 1 à 9 comprend un tel plastron de connexion 48, dont la présence se déduit sur les figures 1 à 3, bien que ce plastron de connexion soit masqué par le coffret sur ces figures, compte-tenu de l'orientation du coffret représentée sur ces figures. On note « L48 » la longueur du plastron 48 et « ℓ48 » sa largeur.

En variante, le plastron de connexion 48 supporte une partie du dispositif de distribution électrique 66, c'est-à-dire une partie des connecteurs et/ou composants du dispositif de distribution électrique. Par exemple, dans le cas d'un coffret de dérivation 30 comprenant deux plastrons de dérivation 48, chaque plastron de dérivation peut comprendre deux prises électriques 68.

Sur l'insert d), un plastron avec porte 50 est représenté. Ce plastron avec porte 50 est en pratique un plastron ajouré 44 modifié de sorte à comprendre en outre une porte 52. La porte 52 est ainsi fixée sur le plastron ajouré 44, de sorte à être mobile entre une position fermée et une position ouverte. Dans la position fermée représentée sur l'insert d), la porte recouvre la fenêtre 46 du plastron ajouré, tout en restant à distance du plan du plastron P44, de sorte à empêcher l'accès aux leviers de commutation 74 des disjoncteurs 72 et à la barre de sécurité 120, sans entrer en contact avec les leviers de commutation ni avec la barre de sécurité. Dans la position fermée, la porte n'empêche pas l'accès aux leviers de commutation et à la barre de sécurité. Ainsi, la porte 50 permet de protéger les leviers de commutation 74 et la barre de sécurité 120 de manipulations accidentelles. Le plastron avec porte 50 ne fait pas partie du coffret de connexion 30 des figures 1 à 9 mais pourrait être monté à la place du plastron ajouré 44. On note « L50 » la longueur du plastron 50 et « ℓ50 » sa largeur.

Sur l'insert d), la porte est représentée dans un matériau opaque, c'est-à-dire qu'elle masque les disjoncteurs 72 et la barre de sécurité 120. La fenêtre 46 n'est ainsi pas visible. En variante, la porte 52 est en matériau transparent, de sorte que les disjoncteurs et la barre de sécurité sont visibles lorsque la porte est en position fermée.

Les longueurs L42, L44, L48 et L50 d'une part et les largeurs ℓ42, ℓ44, ℓ48 et ℓ50 d'autre part sont toutes identiques. Ainsi, les plastrons 42, 44, 48 et 50 s'inscrivent tous dans une même enveloppe, dans un plan défini par leur longueur et leur largeur.

Les plastrons 42, 44, 48 et 50 forment un ensemble de plastrons dont chaque plastron permet de fermer chacune des ouvertures 39 du boîtier 32.

En effet, chaque ouverture 39 est de forme rectangulaire. On note « L39 » la longueur d'une ouverture 39, mesurée selon un axe parallèle à l'axe X30, c'est-à-dire selon un axe parallèle aux traverses 34, et « ℓ39 » la largeur d'une ouverture 39, mesurée, en fonction de l'emplacement de l'ouverture 39, soit selon un axe parallèle à l'axe Y30, soit selon un axe parallèle à l'axe Z30. Toutes les ouvertures 39 ont une longueur L39 identique et une largeur ℓ39 identique. De plus, la longueur L39 est égale aux longueurs L42, L44, L48 et L50 et la largeur ℓ39 est égale aux largeurs ℓ42, ℓ44, ℓ48 et ℓ50. Ainsi, la forme de toutes les ouvertures 39 est identique à la forme des enveloppe des plastrons 40, ce qui permet d'adapter la configuration d'un coffret de dérivation 30, en choisissant les types de plastrons 40 adaptés à l'usage souhaité du coffret.

Lorsqu'ils sont montés sur un coffret de dérivation 30, les plastrons 40 sont soit parallèles, soit perpendiculaires au fond 38 du boîtier 32.

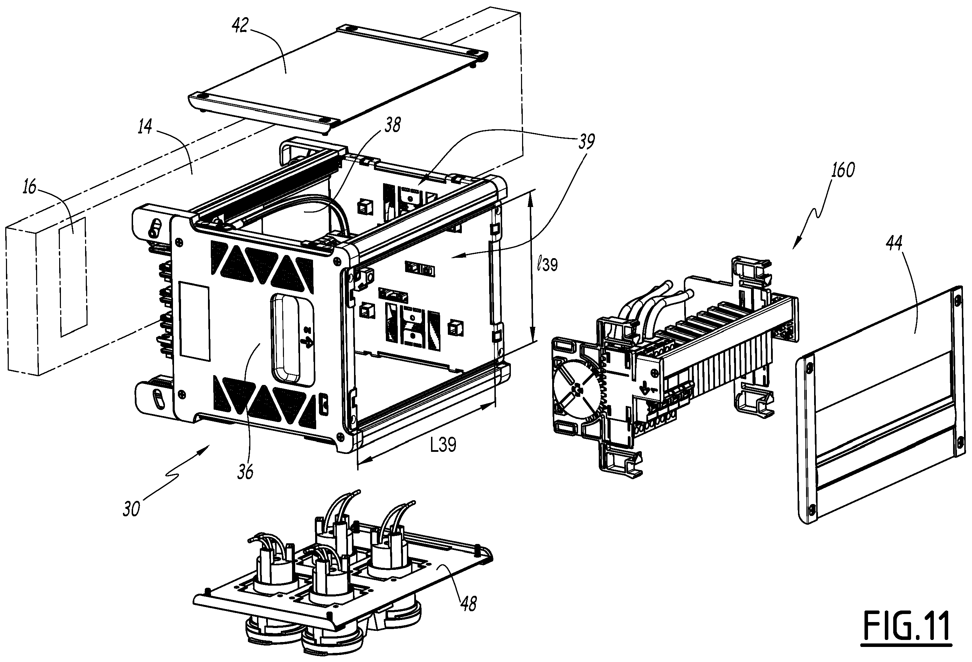

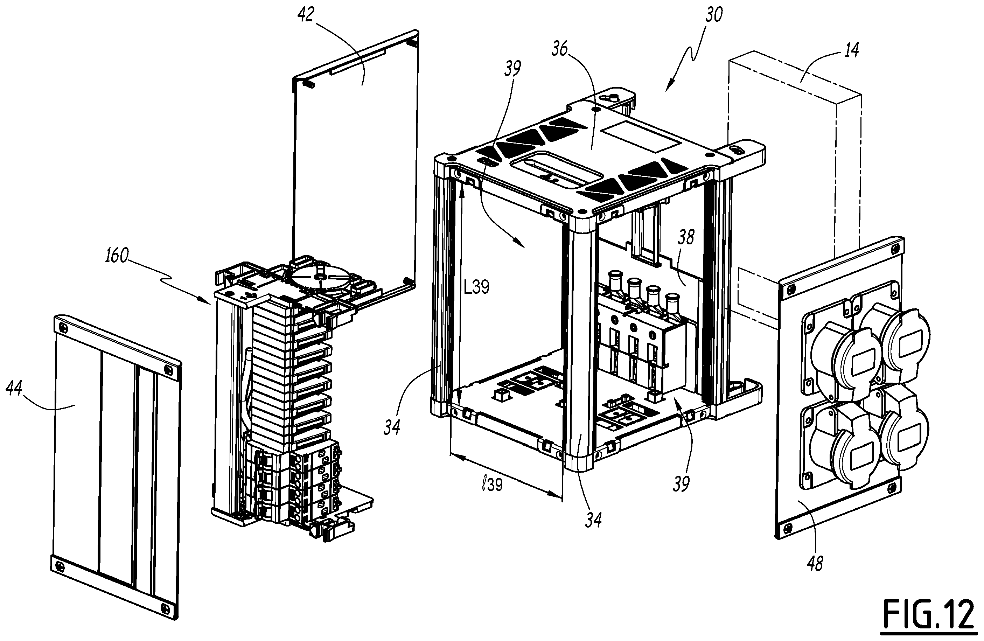

On décrit à présent, en référence aux figures 11 et 12, le coffret de dérivation 30 installé selon deux hypothèses montrées en vue éclatée.

Sur ces deux figures, une partie du jeu de barres 14 est représentée schématiquement par son enveloppe, en traits d'axe. En outre, un groupe de connecteurs 16, situé en regard des connecteurs électriques d'entrée 62 du coffret de dérivation, est également représenté schématiquement.

Sur la figure 11, le coffret de dérivation 30 est montré dans l'hypothèse où le jeu de barres 14 s'étend horizontalement, de sorte que les connecteurs 16 d'un groupe de connecteurs s'étendent verticalement. Le jeu de barres 14 est par exemple fixé contre un mur. De plus, le fond 38 du boîtier est vertical et les joues 36 sont verticales. Ainsi, le coffret est disposé à côté du jeu de barres, comme cela est également visible à la figure 1. Le plastron plein 42, le plastron ajouré 44 et le plastron de connexion 45 sont respectivement situés en haut du caisson, à droite du caisson et en bas du caisson, selon l'orientation montrée à la figure 11.

Sur la figure 12, le coffret de dérivation 30 est montré dans une hypothèse différente de celle de la figure 11. Dans cette hypothèse, le jeu de barres 14 s'étend verticalement, de sorte que les connecteurs 16 d'un groupe de connecteurs s'étendent horizontalement. Le jeu de barres 14 est par exemple fixé contre un mur. De plus, le fond 38 du boîtier est vertical et joues 36 sont horizontales. Ainsi, le coffret est disposé à côté du jeu de barres. Le plastron plein 42, le plastron ajouré 44 et le plastron de connexion 45 sont respectivement situés à gauche du caisson, à l'avant du caisson et à droite du caisson, selon l'orientation montrée à la figure 12.

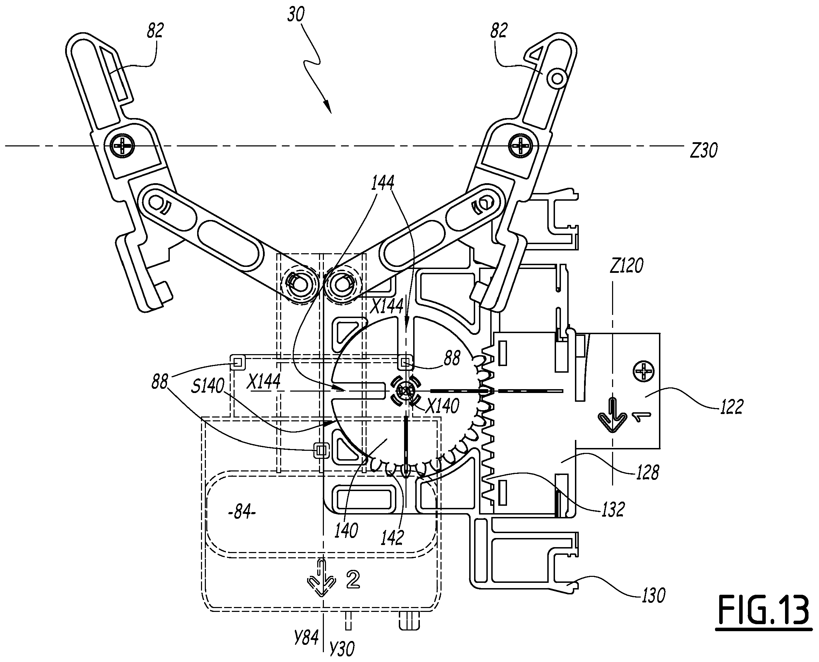

Un deuxième, un troisième, un quatrième et un cinquième modes de réalisation du coffret de dérivation 30 sont illustrés sur les figures 13 à 18. Dans ces modes de réalisation, les éléments analogues à ceux du premier mode de réalisation portent les mêmes références et fonctionnent de la même façon. Dans ce qui suit, on décrit principalement les différences entre chaque mode de réalisation et le ou les précédents. En outre, si un composant est mentionné dans la description de l'un des deuxièmes à cinquième modes de réalisation sans être représenté sur les figures 13 à 18, il correspond au même élément représenté sur les figures 1 à 12 pour le premier mode de réalisation.

Le deuxième mode de réalisation du coffret de dérivation 30 est représenté en figure 13. Ce mode de réalisation peut être mise en œuvre dans le cas d'un coffret de dérivation 30 suspendu sous le jeu de barres 14, avec les disjoncteurs 72 disposés sur un côté du boîtier, et non pas en dessous du boîtier, ce qui est le cas si le coffret de dérivation est selon le premier mode de réalisation.

Dans le deuxième mode de réalisation, le plastron ajouré 44 est perpendiculaire au fond 38. Ainsi, le plastron ajouré est parallèle à un plastron plein 42. Les disjoncteurs 72 et le bloc inerte 76 du dispositif de coupure 70 sont alors orientés perpendiculairement par rapport aux disjoncteurs du premier mode de réalisation, de sorte à être disposés sur le côté du boîtier comprenant le plastron ajouré 44. Pour permettre l'actionnement de leur levier de commutation 74 par la barre de sécurité 120, la barre de sécurité est également orientée perpendiculairement par rapport à la barre de sécurité du premier mode de réalisation, de sorte à s'étendre au travers de la fenêtre 46 du plastron ajouré 44. Ainsi, l'axe de translation de barre Z120 est, dans cet exemple, parallèle à l'axe de profondeur Y30 et à l'axe de poignée Y84.

En pratique, la barre de sécurité 120 étant assemblée avec les supports 130 et les roues dentées 140, ces éléments sont également orientés perpendiculairement par rapport aux supports et aux roues dentées du premier mode de réalisation.

En résumé, la barre de sécurité 120, les deux supports 130, les roues dentées 140 et les disjoncteurs 72 et le bloc inerte 76 du dispositif de coupure 70, qui forment ensemble un ensemble fonctionnel 160, sont disposés sur un côté du boîtier comprenant le plastron ajouré 44, et l'ensemble fonctionnel 160 est orienté perpendiculairement par rapport à l'ensemble fonctionnel du premier mode de réalisation.

Ainsi, le fonctionnement de l'ensemble fonctionnel 160 ne dépend pas de son orientation vis-à-vis des poignées 84.

De manière générale, un ensemble fonctionnel 160 comprend un dispositif de coupure 70.

Selon un aspect particulièrement avantageux de l'invention, ce changement d'orientation et de positionnement de la barre de sécurité 120 et des roues dentées 140 ne change pas le fonctionnement du mécanisme de verrouillage 80, et plus particulièrement, ne change pas l'interaction entre les poignées 84 et le dispositif de blocage 140 formé par les roues dentées. En effet, les pions 88 sont avantageusement positionnés, sur les poignées 84, de sorte que dans l'orientation du deuxième mode de réalisation, lorsque la barre de sécurité 120 est en position de verrouillage, l'un des deux pions périphériques peut s'engager dans l'une des deux gorges 144 des roues dentées, et de sorte que, lorsque la barre de sécurité est en position de déverrouillage, ce même pion périphérique est en butée contre la surface périphérique S140. Le blocage des poignées 84 est ainsi assuré par les roues dentées 140 de la même manière que dans le premier mode de réalisation.

En pratique, lorsque la poignée 120 est en position de déverrouillage, l'axe de gorge X144 s'étendant parallèlement à l'axe de poignée Y84 dans la configuration du premier mode de réalisation, s'étend perpendiculairement à l'axe de poignée Y84 dans la configuration du deuxième mode de réalisation.

Le fait que les roues dentées 140 comprennent chacune deux gorges 144 disposées perpendiculairement entre elles est particulièrement avantageux, car cela permet que, quelle que soit l'orientation des roues dentées 140, et donc de la barre de sécurité 120 et des disjoncteurs 72, l'une des deux gorges 144 d'une roue est toujours orientée parallèlement à l'axe de poignée Y84, lorsque la barre de sécurité est en position de verrouillage. Grâce à cette polyvalence, les disjoncteurs 72 et la barre de sécurité 120 peuvent indifféremment être installés sur un côté du boîtier parallèle, ou perpendiculaire, au fond 38, ce qui rend le coffret de dérivation 30 modulaire et personnalisable.

Ce changement d'orientation est d'autant plus simple à effectuer que le raccordement des disjoncteurs 72 aux connecteurs électriques d'entrée 62 et au dispositif de distribution électrique 66 s'effectue à l'aide de câbles électriques, après l'installation des disjoncteurs dans le boîtier 32, et est donc indépendant de l'orientation des disjoncteurs.

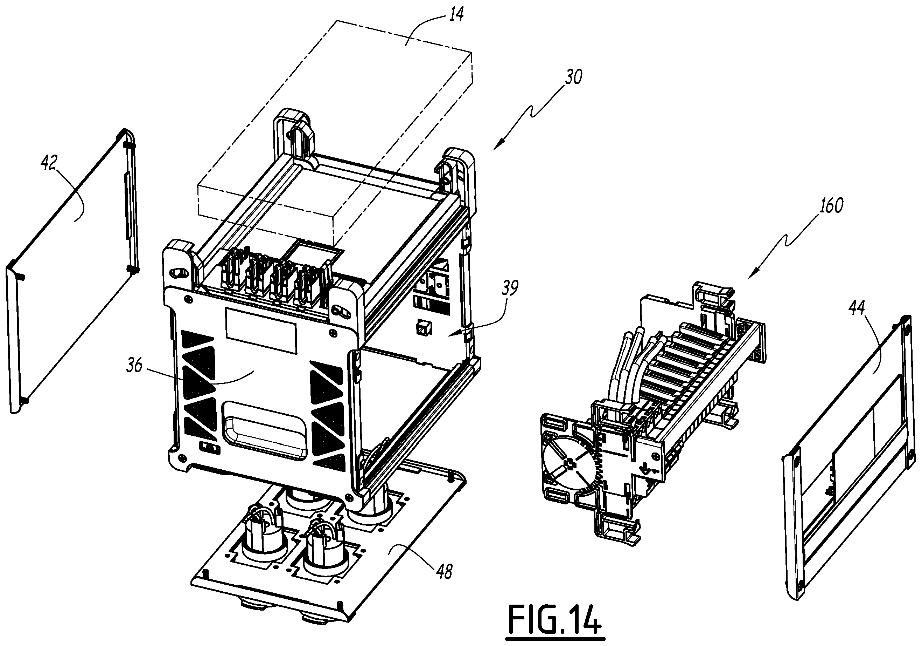

Sur la figure 14, le coffret de dérivation du deuxième mode de réalisation de l'invention est montré dans l'hypothèse où le jeu de barres 14 s'étend horizontalement, de sorte que les connecteurs 16 d'un groupe de connecteurs s'étendent horizontalement. Le jeu de barres 14 est par exemple fixé sur un plafond. De plus, le fond 38 du boîtier est horizontal et les joues 36 sont verticales. Ainsi, le coffret est suspendu sous le jeu de barres. Le plastron plein 42, le plastron ajouré 44 et le plastron de connexion 45 sont respectivement situés à gauche du caisson, à droite du caisson et en bas du caisson, selon l'orientation montrée à la figure 14.

On comprend à la lueur des figures 11, 12 et 14 que les coffrets de dérivation 30 des premier et deuxième modes de réalisation comprennent les mêmes pièces, et que seule la position de ces pièces est différente. Ainsi, pour passer d'un coffret de dérivation selon le premier mode de réalisation de l'invention à un coffret de dérivation selon le deuxième mode de réalisation de l'invention, il suffit de changer la position des plastrons 42, 44 et 48 et de l'ensemble fonctionnel 160.

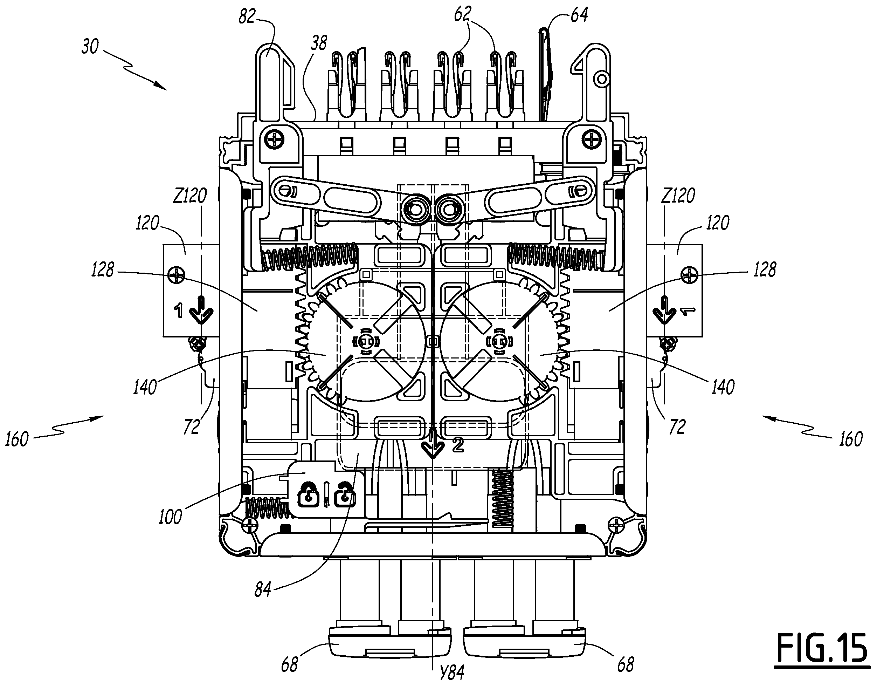

Dans le troisième mode de réalisation de l'invention représenté à la figure 15, le coffret de dérivation 30 comprend deux plastrons ajourés non visibles mais du type du plastron 44 montré à l'insert a) de la figure 10, ces deux plastrons étant disposés parallèlement entre eux et perpendiculairement au fond 38, sur deux côtés opposés du coffret de dérivation. Le coffret de dérivation 30 comprend également deux dispositifs de coupure 70 comprenant chacun des disjoncteurs 72 disposés sur les deux côtés du boîtier 32 comprenant les plastrons ajourés. Le mécanisme de verrouillage comprend alors deux barres de sécurité 120, chaque barre de sécurité s'étendant au travers de la fenêtre 46 de l'un des deux plastrons ajourés 44 et pouvant commuter l'un des deux dispositifs de coupure 70, et quatre roues dentées 140, chaque barre de sécurité entraînant deux roues dentées. En d'autres termes, dans cette variante, le coffret de dérivation 30 comprend deux barres de sécurité et deux paires de roues dentées disposées en miroir les unes des autres.

Le troisième mode de réalisation est représenté en vue de côté à la figure 15, avec deux ensembles fonctionnels 160, une joue 36 étant masquée et une poignée 84 étant représentée en transparence, ce qui est figuré par des pointillés, pour plus de visibilité. Ce troisième mode de réalisation est une variante du deuxième mode de réalisation.

Dans un tel mode de réalisation, et comme représenté à la figure 15, sur laquelle les poignées 120 des deux ensembles fonctionnels 160 sont en position de verrouillage, la translation d'une poignée 84 peut être bloquée par deux roues dentées, car lorsque les deux poignées sont en position de verrouillage, un premier pion périphérique 88 d'une poignée bute sur la surface périphérique S140 d'une première roue dentée et un deuxième pion périphérique bute sur la surface périphérique d'une deuxième roue dentée. Lorsque les deux barres de sécurité sont en position de déverrouillage, les deux pions périphériques 88 d'une poignée s'engagent dans deux des gorges 144 des deux roues dentées associées à cette poignée. Lorsqu'une barre de sécurité est en position de déverrouillage et qu'une barre de sécurité est en position de verrouillage, la translation des poignées 84 vers leur position de déverrouillage est empêchée par le blocage de l'un des pions 88 de chaque poignée contre la surface périphérique S140 de l'une des roues dentées 140. Il est donc particulièrement avantageux que la poignée 84 comprenne deux pions périphériques 88.

Ainsi, dans ce troisième mode de réalisation, le démontage du coffret de dérivation 30 du jeu de barres 14 n'est possible que lorsque les deux barres de sécurité 120 des deux ensembles fonctionnels 160 sont en position de déverrouillage, ce qui assure que le coffret n'est démontable que lorsque les deux dispositifs de coupure sont en configuration ouverte.

Ce mode de réalisation est particulièrement avantageux à mettre en œuvre dans le cas d'un coffret de dérivation 30 suspendu sous le jeu de barres 14, dans une hypothèse analogue à celle représentée à la figure 14 pour le deuxième mode de réalisation, avec les disjoncteurs 72 des deux ensembles fonctionnels 160 disposés sur deux côtés opposés du coffret. Cette configuration permet notamment de protéger distinctement plusieurs circuits raccordés au dispositif de distribution électrique 66, l'alimentation électrique de chaque circuit pouvant être facilement coupée par une barre de sécurité 120 indépendamment de l'autre circuit. De plus, cette configuration présente l'avantage d'être particulièrement compacte, ce qui facilite sa mise en œuvre en environnement industriel.

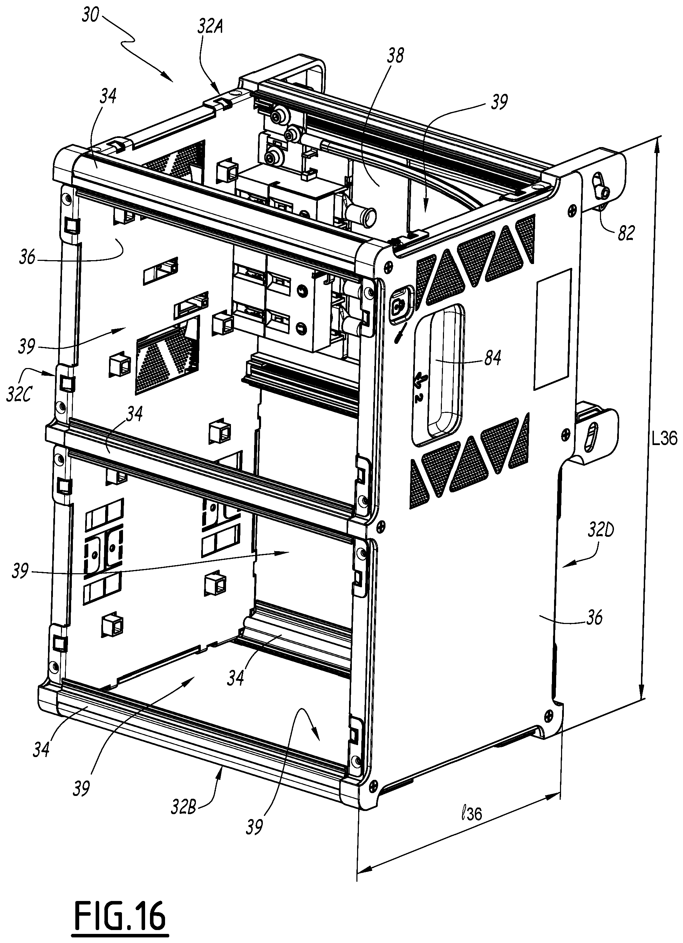

Un coffret de dérivation 30 selon le quatrième mode de réalisation de l'invention est montré à la figure 16. Dans ce quatrième mode de réalisation, les joues 36 sont globalement rectangulaires et la longueur notée L36 des joues 36 est environ égale à deux fois la largeur notée ℓ36 des joues 36. Les joues 36 présentent donc quatre coins, deux bords longs de longueur L36 et deux bords courts de largeur ℓ36. Le boîtier 32 comprend quatre traverses 34, parallèles entre elles et qui s'étendent parallèlement à l'axe X30. Les quatre traverses 34 et le fond 38 constituent ensemble l'armature du coffret de dérivation 30. Les quatre traverses et le fond 38 sont disposés de sorte que l'armature du boîtier est un parallélépipède rectangle, de sorte que trois traverses s'étendent entre trois des quatre coins des joues 36 et une traverse s'étend depuis le centre de l'un des deux bords longs des joues, entre ces joues, en pratique sur le côté avant du boîtier, et de sorte que le fond s'étende depuis le quatrième coin des joues, le long de l'autre bord long des joues, entre ces joues, en pratique sur le côté arrière du boîtier.

Parmi les six côtés du boîtier 32, deux côtés sont fermés par les joues 36. Les quatre autres côtés 32A, 32B, 32C et 32D correspondent respectivement au côté supérieur, inférieur, avant et arrière du boîtier 32, selon l'orientation de la figure 16.

Dans l'exemple de la figure 16, le fond 38 ferme partiellement le côté arrière 32D du boîtier.

Les côtés 32A, 32B, 32C et 32D du boîtier 32 comprennent ainsi cinq ouvertures 39 distinctes qui ne sont pas obturées par le fond 38, chaque ouverture 39 s'étendant entre deux traverses 34 ou entre une traverse et le fond 38, perpendiculairement aux joues 36. Parmi les cinq ouvertures 39, deux sont perpendiculaires au fond 38. Selon l'orientation de la figure 16, ces deux ouvertures sont situées au-dessus et en-dessous du boîtier 32, c'est-à-dire sur les côtés 32A et 32B. Parmi les cinq ouvertures 39, deux autres sont parallèles au fond 38 et situées l'une au-dessus de l'autre sur le côté avant 32C, c'est-à-dire sur le côté du boîtier opposé au côté partiellement fermé par le fond. Parmi les cinq ouvertures 39, une autre est parallèle au fond 38 et située dans le même plan que le fond, sur le côté arrière 32D du boîtier, qui est partiellement fermé par le fond. Dans l'exemple, cette ouverture est située sous le fond 38.

Les poignées 84 du mécanisme de verrouillage 80 étant mobiles dans un mouvement d'éloignement-rapprochement du fond 38 entre leur position de verrouillage et leur position de déverrouillage, elles sont disposées entre le fond 38 et l'ouverture 39 faisant face au fond 38, c'est-à-dire qu'elles sont portées par les joues 36 à proximité du côté supérieur 32A, selon l'orientation de la figure 16.

Le coffret de dérivation 30 comprend un ensemble fonctionnel 160, non-représenté, qui est disposé soit sur le côté avant 32C, au niveau de l'ouverture 39 faisant face au fond 38, soit au niveau de l'ouverture 39 du côté supérieur 32A. Le coffret de dérivation 30 comprend ainsi au moins un plastron ajouré 44 ou un plastron avec porte 50, fermant l'ouverture au niveau de laquelle l'ensemble fonctionnel 160 est disposé.

Quelle que soit la position de l'ensemble fonctionnel 160, les dispositifs de blocage 140 coopèrent avec les poignées 84 pour permettre ou bloquer le mouvement des poignées.

Les autres ouvertures 39 sont fermées par des plastrons 40 pouvant être des plastrons pleins 42, des plastrons ajourés 44, des plastrons de connexion 48 et/ou des plastrons avec porte 50.

Le coffret de dérivation 30 du quatrième mode de réalisation est avantageusement prévu pour être fixé à un jeu de barres 14 s'étendant horizontalement, par exemple à un jeu de barres 14 fixé à un mur, de manière analogue à l'hypothèse de la figure 11.

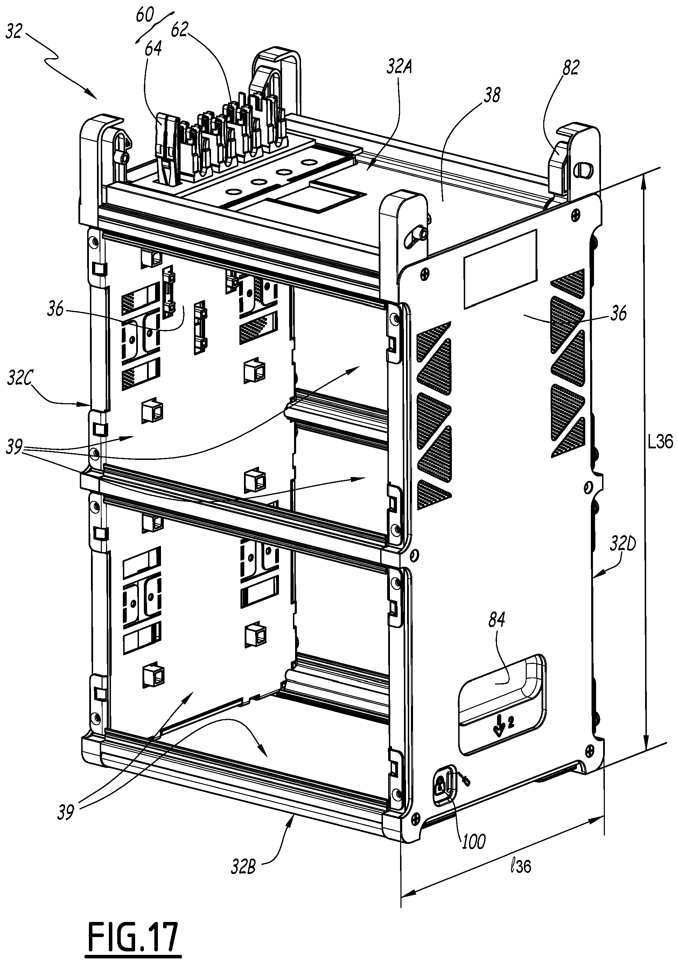

Un coffret de dérivation 30 selon le cinquième mode de réalisation de l'invention est montré à la figure 17. Dans ce cinquième mode de réalisation, comme dans le quatrième, les joues 36 sont globalement rectangulaires et la longueur L36 des joues 36 est environ égale à deux fois la largeur ℓ36 des joues. Le boîtier 32 comprend quatre traverses 34, parallèles entre elles et qui s'étendent parallèlement à l'axe X30. Ces traverses 34 et le fond 38 forment l'armature du coffret de dérivation 30. Les quatre traverses 34 et le fond 38 sont disposés de sorte que l'armature du boîtier est un parallélépipède rectangle, de sorte que deux traverses s'étendent entre les deux coins inférieurs des joues 36 et deux traverses s'étendent depuis le centre des deux plus longs bords des joues, entre les joues, et de sorte que le fond s'étende depuis les deux coins supérieurs des joues 36, entre ces joues, en pratique sur le côté supérieur du boîtier.

Parmi les six côtés du boîtier 32, deux côtés sont fermés par les joues 36. Les quatre autres côtés 32A, 32B, 32C et 32D correspondent respectivement au côté supérieur, inférieur, avant et arrière du boîtier 32, selon l'orientation de la figure 17.

Dans l'exemple de la figure 17, le fond 38 ferme entièrement le côté supérieur 32A du boîtier.

Les côtés 32B, 32C et 32D du boîtier 32 comprennent ainsi cinq ouvertures 39 distinctes, chaque ouverture 39 s'étendant entre deux traverses 34 ou entre une traverse et le fond 38, perpendiculairement aux joues 36. Parmi les cinq ouvertures 39, une est parallèle au fond 38 et située sur le côté inférieur 32B du boîtier, c'est-à-dire sur le côté du boîtier opposé au côté fermé par le fond 38. Parmi les cinq ouvertures 39, quatre autres sont perpendiculaires au fond 38, dont deux sont situées l'une au-dessus de l'autre sur le côté avant 32C et deux sont situées l'une au-dessus de l'autre sur le côté arrière 32D.

Les poignées 84 du mécanisme de verrouillage 80 étant mobiles dans un mouvement d'éloignement-rapprochement du fond 38 entre leur position de verrouillage et leur position de déverrouillage, elles sont disposées entre le fond 38 et l'ouverture 39 faisant face au fond 38. Dans l'exemple, elles sont portées par les joues 36 à proximité du côté inférieur 32B, selon l'orientation de la figure 17. En variante, les poignées 84 sont portées par les joues 36 à proximité du côté supérieur 32B, selon l'orientation de la figure 17.

Le coffret de dérivation 30 comprend un ou deux ensembles fonctionnels 160, non-représentés.

Lorsque le coffret comprend un seul ensemble fonctionnel 160, cet ensemble est disposé soit sur le côté inférieur 32B, soit sur le côté avant 32C, au niveau de l'ouverture 39 la plus proche aux poignées 84, soit sur le côté arrière 32D, au niveau de l'ouverture 39 la plus proche des poignées 84. Dans ce cas, le coffret de dérivation 30 comprend au moins un plastron ajouré 44 ou avec porte 50, fermant l'ouverture au niveau de laquelle l'ensemble fonctionnel 160 est disposé.

Lorsque le coffret comprend deux ensembles fonctionnels 160, ces ensembles sont disposés dos-à-dos sur les côtés 32C et 32D, au niveau des ouvertures les plus proches des poignées. Dans ce cas, le coffret de dérivation 30 comprend au moins deux plastrons ajouré 44 ou avec porte 50, fermant les ouvertures au niveau desquelles les ensembles fonctionnels 160 sont disposés.

Quelle que soit la position du ou des ensembles fonctionnels 160, les dispositifs de blocage 140 coopèrent avec les poignées 84 pour permettre ou bloquer le mouvement des poignées.

Les autres ouvertures 39 sont fermées par des plastrons 40 pouvant être des plastrons pleins 42, des plastrons ajourés 44, des plastrons de connexion 48 et/ou des plastrons avec porte 50.

Le coffret de dérivation 30 du cinquième mode de réalisation est avantageusement prévu pour être fixé à un jeu de barres 14 s'étendant horizontalement, par exemple à un jeu de barres 14 fixé à un plafond, de manière analogue à l'hypothèse de la figure 14.

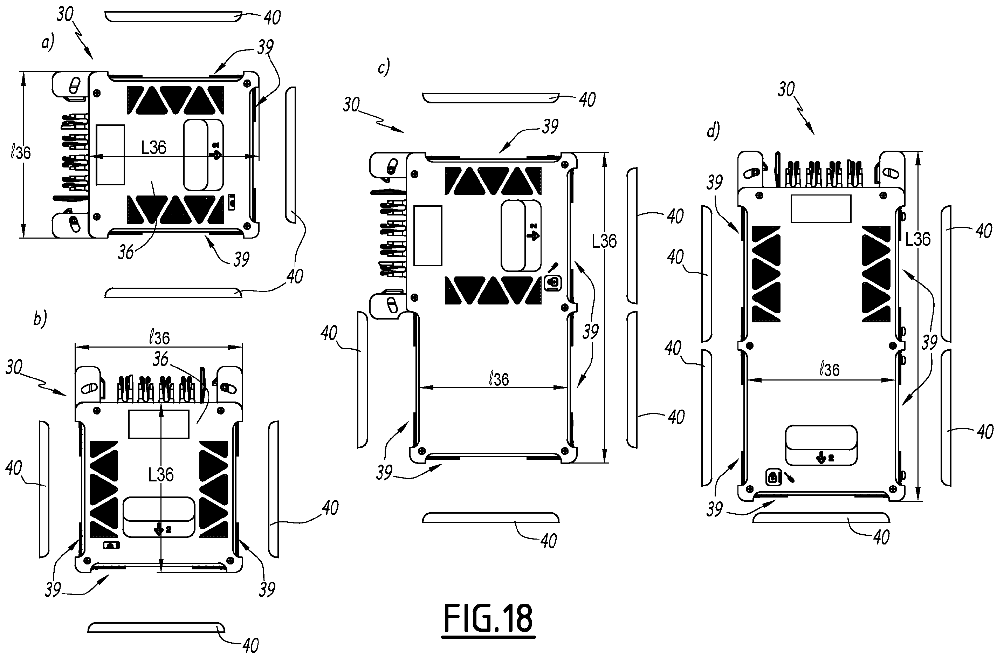

Les quatre inserts de la figure 18 montrent schématiquement les différentes manières dont peuvent être configurés les coffrets de dérivation 30 des premier à cinquième modes de réalisation de l'invention.

Comme visible sur les inserts a) et b), un coffret de dérivation 30 d'une première taille comprend trois ouvertures 39, comme les coffrets des premier, deuxième et troisième modes de réalisation de l'invention. Avantageusement, un coffret de la première taille comprend des joues 36 globalement carrées, dont la longueur L36 est sensiblement égale à la largeur ℓ36, et dont la largeur est sensiblement égale à la largeur ℓ39 des ouvertures 39, ce qui permet de fermer toutes les ouvertures 39 avec les mêmes plastrons 40. Ainsi, toutes les ouvertures 39 peuvent être fermées par un plastron 40, choisi parmi un plastron plein 42, ajouré 46, de connexion 48 ou avec porte 50, ce qui rend très polyvalente la configuration d'un coffret de dérivation 50 de la première taille. La longueur et la largeur des joues 36 sont mesurées dans un plan perpendiculaire aux traverses 34.

En outre, un même coffret de la première taille peut être fixé à côté d'un jeu de barres 12 lui-même fixé à un mur, comme avec le coffret de l'insert a), et suspendu à un jeu de barres lui-même fixé à un plafond, comme avec le coffret de l'insert b), puisque seule l'orientation du coffret diffère entre les inserts a) et b).

Comme visible sur les inserts c) et d), un coffret de dérivation 30 d'une deuxième taille comprend cinq ouvertures 39, comme les coffrets des quatrième et cinquième modes de réalisation de l'invention. Avantageusement, un coffret de la deuxième taille comprend des joues 36 globalement rectangulaires, dont la longueur L36 est environ deux fois supérieure à la largeur ℓ36, dont la largeur est sensiblement égale à la largeur ℓ39 des ouvertures 39, et dont la longueur L36 correspond à environ deux fois la largeur ℓ42, ℓ44, ℓ48 et ℓ50 des plastrons 40, ce qui permet de fermer toutes les ouvertures 39 avec les mêmes plastrons 40. Ainsi, toutes les ouvertures 39 peuvent être fermées par un plastron 40, choisi parmi un plastron plein 42, ajouré 46, de connexion 48 ou avec porte 50, ce qui rend très polyvalente la configuration d'un coffret de dérivation 50 de la deuxième taille. La longueur et la largeur des joues 36 sont mesurées dans un plan perpendiculaire aux traverses 34.

En outre, le coffret de deuxième taille de l'insert c) peut être fixé à côté d'un jeu de barres 12 lui-même fixé à un mur, et le coffret de deuxième taille de l'insert d) peut être suspendu à un jeu de barres lui-même fixé à un plafond.

Avec les coffrets de deuxième taille des inserts c) et d), il est, par exemple, possible de configurer des coffrets de dérivation 30 comprenant :
- deux ensembles fonctionnels 160 associés à deux plastrons ajourés 44 ou 50, deux plastrons de connexion 48 et un plastron plein 42 ;
- un ensemble fonctionnel 160 associé à un plastron ajouré 44 ou 50, un plastron de connexion 48 et trois plastrons pleins 42 ;
- un ensemble fonctionnel 160 associé à un plastron ajouré 44 ou 50, un plastron de connexion 48, deux plastrons pleins 42 ainsi qu'un deuxième plastron ajouré 44 ou 50.

Dans le troisième exemple mentionné ci-dessus, le deuxième plastron ajouré 44 ou 50 est par exemple associé à des disjoncteurs annexes, disposés au niveau d'une autre ouverture 39 que l'ouverture à proximité de laquelle l'ensemble fonctionnel 160 est disposé. Ces disjoncteurs annexes sont connectés en aval au dispositif de distribution électrique 66, et sont préférentiellement connectés en amont aux disjoncteurs 72 du dispositif de coupure 70, de sorte que, lorsque la barre de sécurité 120 est en position de déverrouillage, les disjoncteurs annexes ne sont pas électriquement alimentés par les disjoncteurs 72, qui sont eux-mêmes commutés en configuration ouverte.

Le fait que tous les plastrons 40 peuvent être utilisés pour fermer toutes les ouvertures 39, quelle que soit la configuration d'un coffret de dérivation 30, est particulièrement avantageux, car cela permet de diminuer les coûts de fabrication des coffrets de dérivation conformes à l'invention. En effet, cette polyvalence des plastrons permet de réaliser de nombreuses configurations différentes à l'aide d'éléments génériques et simples à échanger, à savoir ceux montrés à la figure 10 qui peuvent être utilisés dans tous les modes de réalisation.

Une conséquence particulièrement avantageuse provoquée à la fois par le fonctionnement du mécanisme de verrouillage 80, et plus précisément du fait que les dispositifs de blocage 140 peuvent bloquer les poignées 84 indépendamment de leur orientation, et par la polyvalence de la configuration des coffrets 30 de première et de deuxième taille, est qu'il est possible d'adapter très simplement la configuration d'un coffret de dérivation 30 au cours de sa mise en œuvre dans une installation électrique 10, sans avoir à prévoir son orientation au moment de la fabrication du coffret de dérivation.

Par exemple, si au cours de la mise en œuvre d'un coffret 30 comprenant un ensemble fonctionnel 160 au sein d'une installation électrique 10, un utilisateur constate qu'il serait plus pratique, pour accéder aux leviers de commutation 74 et à la barre de sécurité 120, de disposer l'ensemble fonctionnel sur un côté du boîtier 32 dirigé vers le bas, plutôt que sur un côté du boîtier dirigé vers un mur, alors il suffit à l'utilisateur de débrancher les câbles reliés aux disjoncteurs 72, de modifier la position de l'ensemble fonctionnel 160, d'intervertir deux plastrons 40, dont le plastron ajouré 44 ou 50 associé à l'ensemble fonctionnel, et de rebrancher les câbles reliés aux disjoncteurs 72, pour modifier la configuration du coffret de dérivation. Ce changement pouvant être effectué sur site, c'est-à-dire à proximité de l'installation électrique 10, et ne nécessitant pas le recours à de nouvelles pièces, il est particulièrement simple est peu onéreux à mettre en œuvre.

En variante, le mécanisme de verrouillage 80 comprend un nombre différent de crochets 82, par exemple deux ou six crochets, qui peuvent être disposés sur les joues 36 ou à d'autres emplacements du boîtier 32, de sorte à permettre la fixation du boîtier sur le jeu de barres 14. Par exemple, le mécanisme comprend un crochet par joue 36, ou encore deux crochets par joue 36 et deux crochets disposés sur le fond 38.

En variante, le mécanisme de verrouillage 80 comprend un nombre différent de poignées 84, par exemple une seule poignée entraînant l'ensemble des crochets 82. Dans une telle variante, le coffret de dérivation 30 est adapté en conséquence, par exemple en ne prévoyant qu'une seule roue dentée 140 et qu'un seul loquet 100.

En variante, les crochets 82 ne sont pas portés par les joues 36 mais, par exemple, par le fond 38.

En variante, chaque poignée 84 comprend un nombre différent de pions 88, par exemple un seul pion, deux pions ou au moins quatre pions.

En variante, la barre de sécurité 120 est mobile en rotation autour d'un axe perpendiculaire à l'axe de poignée Y84 entre sa position de verrouillage et sa position de déverrouillage, et les crémaillères 132 sont remplacées par des pignons entraînant en rotation les roues dentées 140.

En variante, le dispositif de blocage 140 comprend une seule gorge 144, prévue pour être parallèle à l'axe de poignée Y84 lorsque la barre de sécurité 120 est en position de déverrouillage.

En variante, le dispositif de blocage 140 comprend une seule roue dentée 140, permettant le blocage d'une seule poignée 84.

En variante, la barre de sécurité 120, lorsqu'elle est déplacée en position de déverrouillage, bascule les disjoncteurs 72 en configuration ouverte sans agir sur leurs leviers de commutation 74, par exemple en actionnant un mécanisme d'ouverture interne aux disjoncteurs.

En variante, le dispositif de coupure 70 comprend un sectionneur et la barre de sécurité 120, lorsqu'elle est déplacée en position de déverrouillage, isole les connecteurs électriques d'entrée 62 du dispositif de distribution électrique de sortie 66 en actionnant le sectionneur. Dans une telle variante, le dispositif de coupure 70 peut ne pas comprendre de disjoncteurs 72.

En variante, la barre de sécurité 120 comprend en outre une pièce rapportée, fixée sur la 126, prévue pour élargir localement la tige 126 et faciliter le basculement des leviers de commutation 74 lorsque la barre de sécurité 120 est basculée en position de déverrouillage.

Toute caractéristique décrite pour un mode de réalisation ou une variante dans ce qui précède peut être mise en œuvre pour les autres modes de réalisation et variantes décrits précédemment, pour autant que techniquement faisable et toujours dans l'étendue de protection définie par les revendications.

## Revendications

1. Coffret de dérivation (30) pour jeu de barres (14) comprenant :
- un boîtier (32) de forme globalement parallélépipédique rectangle, comprenant :
∘ au moins deux traverses (34), parallèles entre elles ;
∘ un fond (38) ;
∘ deux joues (36), parallèles entre elles et perpendiculaires au fond, fermant deux côtés opposés du boîtier, et
∘ au moins trois ouvertures (39) distinctes, chaque ouverture s'étendant perpendiculairement aux joues entre deux traverses ou entre une traverse et le fond,
- un mécanisme de verrouillage (80), configuré pour permettre le verrouillage du boîtier (32) sur un jeu de barres (14), et
- un système de distribution électrique (60), comprenant :
∘ des connecteurs électriques d'entrée (62), configurés pour être électriquement connectés au jeu de barres lorsque le boîtier est verrouillé sur le jeu de barres ;
∘ un dispositif de distribution électrique de sortie (66), configuré pour alimenter un circuit électrique aval ; et
∘ au moins un dispositif de coupure (70), disposé à proximité d'une ouverture du boîtier et configuré pour être commutable entre :
▪ une configuration fermée, dans laquelle le dispositif de coupure connecte les connecteurs électriques d'entrée au dispositif de distribution électrique ; et
▪ une configuration ouverte, dans laquelle le dispositif de coupure isole les connecteurs électriques d'entrée du dispositif de distribution électrique,
où, en configuration assemblée du coffret de dérivation (30), chaque ouverture (39) du boîtier (32) est fermée par un plastron (40), chaque plastron étant choisi parmi un ensemble de plastrons distincts comprenant :
- un plastron plein (42) ;
- un plastron de connexion (48) ;
- un plastron ajouré (44) comprenant une fenêtre (46) ; et
- un plastron avec porte (50) comprenant une fenêtre (46),
où, parmi les plastrons (40), au moins un plastron est un plastron ajouré (44) ou un plastron avec porte (50),
où, parmi les plastrons (40), au moins un plastron est un plastron de connexion (48) portant le dispositif de distribution électrique de sortie (66), ou une partie du dispositif de distribution électrique de sortie,
**caractérisé en ce que**,
les traverses (34) s'étendent entre les deux joues (36),
les plastrons (40) s'étendent perpendiculairement aux joues (36) entre deux traverses (34), chaque plastron (40) de l'ensemble de plastrons est configuré pour pouvoir fermer toutes les ouvertures (39) du boîtier (32),
et **en ce que** le dispositif de coupure (70) est disposé sur un côté (32A, 32B, 32C, 32D) du boîtier comprenant un plastron ajouré (44) ou un plastron avec porte (50).

2. Coffret de dérivation (30) selon la revendication 1, dans lequel une longueur (L36) des joues (36) est sensiblement égale à une largeur (ℓ36) des joues, ou dans lequel une longueur (L36) des joues (36) est environ deux fois supérieure à une largeur (ℓ36) des joues, la largeur des joues étant sensiblement égale à une largeur (ℓ39) des ouvertures (39).

3. Coffret de dérivation (30) selon l'une quelconque des revendications précédentes, comprenant au moins deux ensembles fonctionnels (160) disposés sur deux côtés (32A, 32B, 32C, 32D) opposés du boîtier (32), chaque ensemble fonctionnel comprenant un dispositif de coupure (70) et une barre de sécurité (120), la barre de sécurité étant mobile entre une position de déverrouillage, dans laquelle le dispositif de coupure de l'ensemble fonctionnel est en configuration ouverte, et une position de verrouillage.

4. Coffret de dérivation (30) selon la revendication 3, dans lequel le mécanisme de verrouillage (80) comprend une poignée (84), mobile entre une position de verrouillage dans laquelle le coffret de dérivation (30) est configuré pour être verrouillé sur le jeu de barres (14), et une position de déverrouillage dans laquelle le coffret de dérivation est configuré pour ne pas être verrouillé sur le jeu de barres, et dans lequel lorsque la barre de sécurité (120) d'au moins un ensemble fonctionnel (160) est en position de verrouillage, cette barre de sécurité empêche le déplacement de la poignée de sa position de verrouillage vers sa position de déverrouillage.

5. Coffret de dérivation (30) selon l'une quelconque des revendications précédentes, dans lequel :
- les joues (36) sont globalement rectangulaires et présentent quatre coins, deux bords longs et deux bords courts, une longueur (L36) des bords longs des joues étant environ égale à deux fois une largeur (ℓ36) des bords courts des joues ;
- le boîtier comprend quatre traverses (34), parmi lesquelles :
∘ trois traverses s'étendent entre les joues entre trois des quatre coins des joues et une traverse s'étend entre les joues depuis le centre de l'un des deux bords longs des joues, le fond s'étendant entre les joues depuis le quatrième coin des joues le long de l'autre bord long des joues ; ou
∘ deux traverses s'étendent entre les joues entre deux des coins des joues et deux traverses s'étendent entre les joues depuis le centre des deux bords longs des joues, le fond s'étendant entre les joues depuis les deux autres coins des joues,
- le boîtier comprend cinq ouvertures (39) distinctes, les cinq ouvertures étant réparties sur les quatre côtés (32A, 32B, 32C, 32D) du boîtier (32) n'étant pas fermés par les joues ; et
- chaque ouverture est fermée par un plastron (40).

6. Coffret de dérivation (30) selon l'une quelconque des revendications précédentes, dans lequel chaque plastron (40) est soit parallèle, soit perpendiculaire au fond (38) du boîtier (32).

7. Coffret de dérivation (30) selon l'une quelconque des revendications précédentes, dans lequel la fenêtre (46) du plastron ajouré (44) ou du plastron avec porte (50) est configurée pour qu'un levier de commutation (74) du dispositif de coupure (70) s'étende au travers de la fenêtre et puisse être commuté depuis l'extérieur du boîtier (32), le levier de commutation étant commutable entre une position ouverte dans laquelle le dispositif de coupure est en configuration ouverte et une position fermée dans laquelle le dispositif de coupure est en configuration fermée.

8. Coffret de dérivation (30) selon l'une quelconque des revendications précédentes, dans lequel le plastron de connexion (48) comprend au moins une prise électrique (68).

9. Coffret de dérivation (30) selon l'une quelconque des revendications précédentes, dans lequel les plastrons (40) de l'ensemble de plastrons sont configurés pour fermer les ouvertures (39) du boîtier (32) dans au moins deux configurations distinctes du coffret de dérivation (30), entre lesquelles le plastron de connexion (48) et/ou le plastron ajouré (44) ou le plastron avec porte (50) sont orientés différemment par rapport au fond (38).

10. Coffret de dérivation (30) selon l'une quelconque des revendications précédentes, dans lequel les plastrons (40) de l'ensemble de plastrons sont configurés pour fermer les ouvertures (39) du boîtier (32) dans au moins deux configurations distinctes du coffret de dérivation (30), dans lequel, dans une première configuration du coffret de dérivation, le fond (38) ferme entièrement un côté supérieur (32A) du boîtier, et dans lequel, dans une deuxième configuration du coffret de dérivation, le fond ferme entièrement ou partiellement un côté arrière (32D) du coffret de dérivation.

## Patentansprüche

1. Abzweigkasten (30) für Sammelschiene (14) umfassend:
- ein Gehäuse (32) mit einer im Wesentlichen rechteckigen Parallelepipedform, umfassend:
∘ mindestens zwei zueinander parallele Querstreben (34);
∘ einen Boden (38);
∘ zwei Wangen (36), parallel zueinander und senkrecht zum Boden, die zwei gegenüberliegende Seiten des Gehäuses verschließen, und
∘ mindestens drei separate Öffnungen (39), wobei sich jede Öffnung senkrecht zu den Wangen zwischen zwei Querstreben oder zwischen einer Querstrebe und dem Boden erstreckt,
- einen Verriegelungsmechanismus (80), der konfiguriert ist, um die Verriegelung des Gehäuses (32) an einer Sammelschiene (14) ermöglicht, und
- ein elektrisches Verteilungssystem (60), umfassend:
∘ elektrische Eingangsverbinder (62), die konfiguriert sind, um elektrisch mit der Sammelschiene verbunden zu sein, wenn das Gehäuse an der Sammelschiene verriegelt ist;
∘ eine Ausgangsstromverteilungsvorrichtung (66), die konfiguriert ist, um einen stromabwärtigen Stromkreis mit Strom zu versorgen; und
∘ mindestens eine Unterbrechungsvorrichtung (70), die in der Nähe einer Öffnung des Gehäuses angeordnet und konfiguriert ist, um umschaltbar zu sein zwischen:
■ einer geschlossenen Konfiguration, in der die Unterbrechungsvorrichtung die elektrischen Eingangsverbinder mit der Stromverteilungsvorrichtung verbindet; und
■ einer offenen Konfiguration, in der die Unterbrechungsvorrichtung die elektrischen Eingangsverbinder von der Stromverteilungsvorrichtung isoliert,
wobei, in der zusammengebauten Konfiguration des Abzweigkastens (30) jede Öffnung (39) des Gehäuses (32) durch eine Frontplatte (40) verschlossen ist,
wobei jede Frontplatte ausgewählt ist aus einer Gruppe von unterschiedlichen Frontplatten, umfassend:
- eine massive Frontplatte (42);
- eine Verbindungsfrontplatte (48);
- eine durchbrochene Frontplatte (44), umfassend ein Fenster (46); und
- ein Frontplatte mit Tür (50), umfassend ein Fenster (46),
wobei, von den Frontplatten (40) mindestens eine Frontplatte eine durchbrochene Frontplatte (44) oder eine Frontplatte mit Tür (50) ist,
wobei von den Frontplatten (40) mindestens eine Frontplatte eine Verbindungsfrontplatte (48) ist, die die Ausgangsstromverteilungsvorrichtung (66) oder einen Teil der Ausgangsstromverteilungsvorrichtung trägt,
**dadurch gekennzeichnet, dass**
sich die Querstreben (34) zwischen den zwei Wangen (36) erstrecken,
sich die Frontplatten (40) senkrecht zu den Wangen (36) zwischen zwei Querstreben (34) erstrecken,
jede Frontplatte (40) der Frontplattenanordnung konfiguriert ist, um alle Öffnungen (39) des Gehäuses (32) zu verschließen,
und dass die Unterbrechungsvorrichtung (70) auf einer Seite (32A, 32B, 32C, 32D) des Gehäuses angeordnet ist, das eine durchbrochene Frontplatte (44) oder eine Frontplatte mit Tür (50) umfasst.

2. Abzweigkasten (30) nach Anspruch 1, wobei eine Länge (L36) der Wangen (36) im Wesentlichen gleich wie eine Breite (I36) der Wangen ist, oder wobei eine Länge (L36) der Wangen (36) etwa doppelt so groß wie eine Breite (I36) der Wangen ist, wobei die Breite der Wangen im Wesentlichen gleich wie eine Breite (I39) der Öffnungen (39) ist.

3. Abzweigkasten (30) nach einem der vorherigen Ansprüche, umfassend mindestens zwei funktionelle Anordnungen (160), die auf zwei gegenüberliegenden Seiten (32A, 32B, 32C, 32D) des Gehäuses (32) angeordnet sind, jede funktionelle Anordnungen umfassend eine Unterbrechungsvorrichtung (70) und eine Sicherheitsleiste (120), wobei die Sicherheitsleiste beweglich ist zwischen einer Entriegelungsposition, in der die Unterbrechungsvorrichtung der funktionellen Anordnung in einer offenen Konfiguration ist, und einer Verriegelungsposition.

4. Abzweigkasten (30) nach Anspruch 3, wobei der Verriegelungsmechanismus (80) einen Griff (84) umfasst, der beweglich ist zwischen einer Verriegelungsposition, in der der Abzweigkasten (30) konfiguriert ist, um an der Sammelschiene (14) verriegelt zu sein, und einer Entriegelungsposition, in der der Abzweigkasten konfiguriert ist, um nicht an der Sammelschiene verriegelt zu sein, und wobei, wenn die Sicherheitsleiste (120) von mindestens einer funktionellen Anordnung (160) in der Verriegelungsposition ist, diese Sicherheitsleiste die Bewegung des Griffs aus seiner Verriegelungsposition in seine Entriegelungsposition verhindert.

5. Abzweigkasten (30) nach einem der vorherigen Ansprüche, wobei:
- die Wangen (36) generell rechteckig sind und vier Ecken, zwei lange Ränder und zwei kurze Ränder aufweisen, wobei eine Länge (L36) der langen Ränder der Wangen ungefähr gleich wie das Zweifache einer Breite (ℓ36) der kurzen Ränder der Wangen ist;
- das Gehäuse vier Querstreben (34) umfasst, wovon:
∘ sich drei Querstreben zwischen den Wangen zwischen drei der vier Wangenecken erstrecken und eine Querstrebe sich zwischen den Wangen von der Mitte einer der zwei langen Wangenränder aus erstreckt, wobei sich der Boden zwischen den Wangen von der vierten Wangenecke aus entlang des anderen langen Wangenrands erstreckt; oder
∘ sich zwei Querstreben zwischen den Wangen zwischen zwei der Wangenecken erstrecken und zwei Querstreben sich zwischen den Wangen von der Mitte der zwei langen Wangenränder aus erstrecken, wobei sich der Boden zwischen den Wangen von den zwei anderen Wangenecken aus erstreckt,
- das Gehäuse fünf separate Öffnungen (39) aufweist, wobei die fünf Öffnungen über die vier Seiten (32A, 32B, 32C, 32D) des Gehäuses (32) verteilt sind, die nicht durch die Wangen verschlossen sind; und
- jede Öffnung durch eine Frontplatte (40) verschlossen ist.

6. Abzweigkasten (30) nach einem der vorherigen Ansprüche, wobei jede Frontplatte (40) entweder parallel oder senkrecht zu dem Boden (38) des Gehäuses (32) ist.

7. Abzweigkasten (30) nach einem der vorherigen Ansprüche, wobei das Fenster (46) der durchbrochenen Frontplatte (44) oder der Frontplatte mit Tür (50) konfiguriert ist, damit ein Schalthebel (74) der Unterbrechungsvorrichtung (70) sich durch das Fenster erstreckt und von außerhalb des Gehäuses (32) geschaltet werden kann, wobei der Schalthebel zwischen einer offenen Position, in der die Unterbrechungsvorrichtung in einer offenen Konfiguration ist, und einer geschlossenen Position, in der die Unterbrechungsvorrichtung in einer geschlossenen Konfiguration ist, umschaltbar ist.

8. Abzweigkasten (30) nach einem der vorherigen Ansprüche, wobei die Verbindungsfrontplatte (48) mindestens eine elektrische Steckdose (68) umfasst.

9. Abzweigkasten (30) nach einem der vorherigen Ansprüche, wobei die Frontplatten (40) der Frontplattenanordnung konfiguriert sind, um die Öffnungen (39) des Gehäuses (32) in mindestens zwei verschiedenen Konfigurationen des Abzweigkastens (30) zu verschließen, zwischen denen die Verbindungsfrontplatte (48) und/oder die durchbrochene Frontplatte (44) oder die Frontplatte mit Tür (50) in Bezug auf den Boden (38) unterschiedlich ausgerichtet sind.

10. Abzweigkasten (30) nach einem der vorherigen Ansprüche, wobei die Frontplatten (40) der Frontplattenanordnung konfiguriert sind, um die Öffnungen (39) des Gehäuses (32) in mindestens zwei verschiedenen Konfigurationen des Abzweigkastens (30) zu verschließen, wobei in einer ersten Konfiguration des Abzweigkastens der Boden (38) eine obere Seite (32A) des Gehäuses vollständig verschließt, und wobei in einer zweiten Konfiguration des Abzweigkastens, der Boden eine Rückseite (32D) des Abzweigkastens vollständig oder teilweise verschließt.

## Claims

1. A tap-off box (30) for bus bar (14) comprising:
- a housing (32) of generally rectangular parallelepiped shape, comprising:
∘ at least two crosspieces (34), parallel to each other;
∘ a base (38);
∘ two flanges (36), parallel to each other and perpendicular to the base, closing two opposite sides of the housing, and
∘ at least three separate opening (39), each opening extending perpendicularly to the flanges between two crosspieces or between a crosspiece and the base,
- a locking mechanism (80), configured to allow the housing (32) to be locked to a bus bar (14), and
- an electrical distribution system (60), comprising:
∘ electrical input connectors (62), configured to be electrically connected to the bus bar when the housing is locked to the bus bar;
∘ an output electrical distribution device (66), configured to supply a downstream electrical circuit; and
∘ at least one cutoff device (70), located close to an opening in the housing and configured to be switchable between:
■ a closed configuration, wherein the switching device connects the electrical input connectors to the electrical distribution device; and
■ an open configuration, wherein the isolating device isolates the electrical input connectors from the electrical distribution device,
where, in the assembled configuration of the tap-off box (30), each opening (39) of the box (32) is closed by a faceplate (40),
each faceplate being chosen from a set of distinct faceplates comprising:
- a solid faceplate (42);
- a connection faceplate (48) ;
- a perforated faceplate (44) comprising a window (46); and
- a faceplate with a door (50) comprising a window (46),
where, of the faceplates (40), at least one faceplate is a perforated faceplate (44) or a faceplate with a door (50),
where, among the faceplates (40), at least one faceplate is a connection faceplate (48) carrying the output electrical distribution device (66), or part of the output electrical distribution device, **characterised in that**,
the crosspieces (34) extend between the two flanges (36),
the faceplates (40) extend perpendicularly to the flanges (36) between two crosspieces (34), each faceplate (40) of the set of faceplates is configured so as to be able to close all the openings (39) of the housing (32),
and **in that** the cutoff device (70) is arranged on one side (32A, 32B, 32C, 32D) of the housing comprising a perforated faceplate (44) or a faceplate with a door (50).

2. The tap-off box (30) according to claim 1, wherein a length (L36) of the flanges (36) is substantially equal to a width (ℓ36) of the flanges, or wherein a length (L36) of the flanges (36) is about twice a width (ℓ36) of the flanges, the width of the flanges being substantially equal to a width (ℓ39) of the openings (39).

3. The tap-off box (30) according to any one of the preceding claims, comprising at least two functional assemblies (160) arranged on two opposite sides (32A, 32B, 32C, 32D) of the box (32), each functional assembly comprising a cutoff device (70) and a safety bar (120), the safety bar being movable between an unlocked position, wherein the cutoff device of the functional assembly is in the open configuration, and a locked position.

4. The tap-off box (30) according to claim 3, wherein the locking mechanism (80) comprises a handle (84), movable between a locked position wherein the tap-off box (30) is configured to be locked to the busbar (14), and an unlocked position wherein the tap-off box is configured not to be locked to the busbar, and wherein when the safety bar (120) of at least one functional assembly (160) is in the locked position, this safety bar prevents the handle from moving from its locked position to its unlocked position.

5. The tap-off box (30) according to any one of the preceding claims, wherein:
- the flanges (36) are generally rectangular and have four corners, two long edges and two short edges, a length (L36) of the long edges of the flanges being approximately equal to twice a width (ℓ36) of the short edges of the flanges;
- the housing comprises four crosspieces (34), including:
∘ three crosspieces extend between the flanges between three of the four corners of the flanges and one crosspiece extends between the flanges from the centre of one of the two long edges of the flanges, the base extending between the flanges from the fourth corner of the flanges along the other long edge of the flanges; or
∘ two crosspieces extend between the flanges between two of the corners of the flanges and two crosspieces extend between the flanges from the centre of the two long edges of the flanges, with the base extending between the flanges from the other two corners of the flanges,
- the housing comprises five separate openings (39), the five openings being distributed over the four sides (32A, 32B, 32C, 32D) of the housing (32) not closed by the flanges; and
- each opening is closed by a faceplate (40).

6. The tap-off box (30) according to any one of the preceding claims, wherein each faceplate (40) is either parallel or perpendicular to the base (38) of the box (32).

7. The tap-off box (30) according to any one of the preceding claims, wherein the window (46) of the perforated faceplate (44) or the faceplate with a door (50) is configured so that a switching lever (74) of the cutoff device (70) extends through the window and can be switched from outside the housing, the switching lever being switchable between an open position wherein the switching device is in the open configuration and a closed position wherein the cutoff device is in the closed configuration.

8. The tap-off box (30) according to any of the previous claims, wherein the locking mechanism (48) furthermore includes at least one electrical outlet (68).

9. The tap-off box (30) according to any one of the preceding claims, wherein the faceplates (40) of the set of faceplates are configured to close the openings (39) of the housing (32) in at least two distinct configurations of the tap-off box (30), between which the connection faceplate (48) and/or the perforated faceplate (44) or the faceplate with door (50) are orientated differently with respect to the base (38).

10. The tap-off box (30) according to any one of the preceding claims, wherein the faceplates (40) of the set of faceplates are configured to close the openings (39) of the housing (32) in at least two distinct configurations of the tap-off box (30), wherein, in a first configuration of the tap-off box, the base (38) fully closes an upper side (32A) of the housing, and wherein, in a second configuration of the tap-off box, the base fully or partially closes a rear side (32D) of the tap-off box.
